# EUROPEAN PATENT APPLICATION

(11) **EP 4 838 810 A1**
(43) Date of publication of application: **11.11.2026**
(21) Application number: 24919677.5
(22) Date of filing: 07.08.2024
(51) Int. Cl.: H04B 10/25

(54) **DATA TRANSMISSION METHOD, COMMUNICATION DEVICE AND STORAGE MEDIUM**

(30) Priority: 25.01.2024 CN 202410114486
(71) Applicant: Huawei Technologies Co., Ltd., Shenzhen, Guangdong 518129 (CN)
(72) Inventor: DU, Wenhua, Shenzhen, Guangdong 518129 (CN); LIU, Yongzhi, Shenzhen, Guangdong 518129 (CN); CHENG, Chuanning, Shenzhen, Guangdong 518129 (CN); CHEN, Hui, Shenzhen, Guangdong 518129 (CN); HONG, Junjie, Shenzhen, Guangdong 518129 (CN)
(74) Representative: Huawei European IPR
(86) International application number: PCT/CN2024/110259
(87) International publication number: WO 2025/156595

(57) **Abstract**

Embodiments of this application provide a data transmission method, a communication device, and a storage medium, to improve reliability of data transmission and reduce a packet loss rate in a data transmission process. When a transmission link is abnormal, zero packet loss can be even implemented together with link-level retransmission. The method is applied to a first communication device, where the first communication device includes a sending port, and the sending port is separately connected to a first sending module and a second sending module. The method includes: The first communication device sends a first data sub-stream to the first sending module through the sending port, where the first sending module is configured to send the first data sub-stream to a second communication device; and the first communication device sends a second data sub-stream to the second sending module through the sending port, where the second sending module is configured to send the second data sub-stream to the second communication device, the first data sub-stream and the second data sub-stream are two of M data sub-streams, and M is any integer not less than 2.

## Description

This application claims priority to Chinese Patent Application No. 202410114486.5, filed with the China National Intellectual Property Administration on January 25, 2024 and entitled "DATA TRANSMISSION METHOD, COMMUNICATION DEVICE, AND STORAGE MEDIUM", which is incorporated herein by reference in its entirety.

### TECHNICAL FIELD

This application relates to the field of communication technologies, and in particular, to a data transmission method, a communication device, and a storage medium.

### BACKGROUND

With the development of fields such as telecommunication networks, data centers, cloud computing, and industrial internet of things, optical communication systems are increasingly widely used. The optical communication system includes at least one first optical communication device and a second optical communication device. Data is transmitted between the first optical communication device and the second optical communication device through a transmission link. The transmission link includes an optical module of the first optical communication device, an optical fiber, and an optical module of the second optical communication device that are sequentially connected.

If an abnormality occurs on the transmission link, traffic to be transmitted through the transmission link is interrupted, and consequently, reliability of data transmission is reduced.

### SUMMARY

Embodiments of this application provide a data transmission method, a communication device, and a storage medium, to improve reliability of data transmission and reduce a packet loss rate in a data transmission process. When a transmission link is abnormal, zero packet loss can be even implemented together with link-level retransmission.

According to a first aspect, an embodiment of this application provides a data transmission method, where the method is applied to a first communication device. The first communication device includes a first board, a processor of the first board includes a sending port, and the sending port is separately connected to a first sending module and a second sending module. The method includes: The sending port of the first communication device obtains M data sub-streams, where M is any integer not less than 2, and the M data sub-streams include a first data sub-stream and a second data sub-stream. For example, the processor of the first board divides a target data stream into M data sub-streams. For another example, the processor of the first board sends the target data stream to the sending port, and the sending port divides the target data stream to obtain M data sub-streams. Then, the first communication device sends the first data sub-stream to the first sending module through the sending port. The first sending module is configured to send the first data sub-stream to a second communication device. Then, the first communication device sends the second data sub-stream to the second sending module through the sending port, where the second sending module is configured to send the second data sub-stream to the second communication device. A first transmission link on which the first sending module is located is different from a second transmission link on which the second sending module is located. The first transmission link specifically includes the first sending module, a first optical fiber, and a first receiving module. The first receiving module is connected to a receiving port of the second communication device, and the first optical fiber is connected between the first sending module and the first receiving module. The second transmission link specifically includes the second sending module, a second optical fiber, and a second receiving module. The second sending module is connected to the sending port, the second receiving module is connected to the receiving port, and the second optical fiber is connected between the second sending module and the second receiving module. It may be understood that the first transmission link and the second transmission link are different from each other and are independent of each other, and are isolated from each other.

As shown in this aspect, the first communication device divides a data stream to be sent from a same sending port, to obtain the first data sub-stream and the second data sub-stream. The first data sub-stream is sent to the second communication device through the first sending module, and the second data sub-stream is sent to the second communication device through the second sending module, so that the target data stream is transmitted to the second communication device through different transmission links. In this case, when any type of abnormality occurs on either of the first transmission link and the second transmission link, traffic of the target data stream sent by the first communication device to the second communication device is not interrupted, thereby improving reliability of transmitting a data stream from the first communication device to the second communication device.

Based on the first aspect, in an optional implementation, a rate of the first data sub-stream is equal to a rate of the second data sub-stream. In this implementation, balance of rates received by the first sending module and the second sending module is effectively ensured, thereby improving a throughput of a communication system.

Based on the first aspect, in an optional implementation, the sending port is connected to the first sending module through a first sending circuit, and the sending port is connected to the second sending module through a second sending circuit. That the first communication device sends the first data sub-stream to the first sending module through the sending port includes: The first communication device sends the first data sub-stream to the first sending module through the sending port and the first sending circuit. That the first communication device sends the second data sub-stream to the second sending module through the sending port includes: The first communication device sends the second data sub-stream to the second sending module through the sending port and the second sending circuit.

In this implementation, a same sending port of the first communication device is separately connected to the first sending module and the second sending module that are different, and sends traffic of the target data stream to the two different sending modules. This effectively ensures that, even if an abnormality occurs on one of the first transmission link and the second transmission link, traffic between the sending port and the second communication device is not interrupted, thereby improving reliability of data transmission.

Based on the first aspect, in an optional implementation, after the first communication device divides the target data stream into M data sub-streams, the method further includes: The first communication device detects that a first transmission link is abnormal, where the first transmission link is the transmission link on which the first sending module is located, and the first transmission link is connected between the first communication device and the second communication device; and the first communication device sends at least one portion of the first data sub-stream to the second sending module through the sending port, where the second sending module is configured to send the at least one portion of the first data sub-stream and the second data sub-stream to the second communication device.

In this implementation, when the first transmission link is abnormal, the first data sub-stream that has arrived at the sending port is switched to the second transmission link for transmission. This reduces a packet loss rate and even can implement zero packet loss together with a link-level retransmission technology of the transmission link. In addition, on the premise that a packet loss rate during transmission of the first data sub-stream is reduced, or even zero packet loss is implemented, because the first data sub-stream does not need to be retransmitted through a transmission layer, compared with retransmission at a transmission layer level, direct transmission of the first data sub-stream that has arrived at the first sending port through the second transmission link effectively reduces a delay of transmission of the first data sub-stream.

Based on the first aspect, in an optional implementation, the first data stream includes a first data unit and a second data unit, a time sequence in which the sending port sends the first data unit is earlier than a time sequence in which the sending port sends the second data unit, and each data unit may be a data packet or a data frame. If the first data unit has been transmitted through the first transmission link, the second data unit has not been transmitted through the first transmission link, an abnormality occurs on the first transmission link, and the first data unit has not been successfully sent to the second communication device through the first transmission link, the sending port sends the first data unit and the second data unit to the second sending module. If the first data unit has been transmitted through the first transmission link, the second data unit has not been transmitted through the first transmission link, an abnormality occurs on the first transmission link, and the first data unit is successfully sent to the second communication device through the first transmission link, the sending port sends the second data unit to the second sending module. If both the first data unit and the second data unit have been transmitted through the first transmission link, an abnormality occurs on the first transmission link, and the first data unit and the second data unit have not been successfully sent to the second communication device through the first transmission link, the sending port sends the first data unit and the second data unit to the second sending module. If both the first data unit and the second data unit have been transmitted through the first transmission link, an abnormality occurs on the first transmission link, and the first data unit and the second data unit have been successfully sent to the second communication device through the first transmission link, the sending port does not need to send the first data unit and the second data unit to the second sending module.

In this implementation, a packet loss rate of sending a data stream to the second communication device is effectively reduced, and because the sending port can retransmit a data unit, even zero packet loss can be implemented.

Based on the first aspect, in an optional implementation, the first communication device further includes a cross-connect unit. Before the first communication device sends the first data sub-stream to the first sending module through the sending port and the first sending circuit, and the first communication device sends the second data sub-stream to the second sending module through the sending port and the second sending circuit, the method further includes: The first communication device connects the first sending circuit to the second sending circuit through the cross-connect unit.

In this implementation, the first communication device can flexibly connect, through the included cross-connect unit, a circuit between the sending port and each sending module as required, to control a sending module to which a data stream emitted from the sending port is specifically sent. This improves flexibility of data stream transmission. In this example, to improve reliability of data stream transmission and reduce a packet loss rate of data stream transmission, the cross-connect unit may connect a circuit between the sending port and the first sending module, and may further connect a circuit between the sending port and the second sending module.

Based on the first aspect, in an optional implementation, before the first communication device connects the first sending circuit to the second sending circuit through the cross-connect unit, the method further includes: The first communication device detects that both a first transmission link and a second transmission link are normal, where the first transmission link and the second transmission link are separately connected between the first communication device and the second communication device, the first transmission link is the transmission link on which the first sending module is located, and the second transmission link is the transmission link on which the second sending module is located.

In this implementation, to improve reliability of data stream transmission, reduce a packet loss rate of data stream transmission, and even implement zero packet loss, the first sending circuit may be connected to the second sending circuit through the cross-connect unit, to ensure that data streams emitted from a same sending port are sent to the second communication device through two different sending modules.

Based on the first aspect, in an optional implementation, after the first communication device divides the target data stream into M data sub-streams, the method further includes: The first communication device detects that a first transmission link is abnormal, where the first transmission link is the transmission link on which the first sending module is located, and the first transmission link is connected between the first communication device and the second communication device; and the first communication device sends at least one portion of the first data sub-stream to the second sending module through the sending port and the second sending circuit, where the second sending module is configured to send the at least one portion of the first data sub-stream and the second data sub-stream to the second communication device.

In this implementation, when the first communication device detects that the first transmission link is abnormal, data streams emitted from a same sending port are all sent to the second communication device through the second transmission link in a normal state. In this case, even if an abnormality occurs on the first transmission link, it can be ensured that traffic sent by the first communication device to the second communication device is not interrupted, a packet loss rate is effectively reduced, and even zero packet loss is implemented.

Based on the first aspect, in an optional implementation, after the first communication device detects that the first transmission link is abnormal, the method further includes: The first communication device detects that the first transmission link is normal, and the first communication device obtains a first data stream, where the first data stream is a portion of a data stream to be sent through the second sending module; the first communication device sends the first data stream to the first sending module through the sending port; and the first communication device sends a second data stream to the second sending module through the sending port.

In this implementation, when the first communication device detects that the first transmission link is restored from abnormal to normal, the first communication device can reallocate rates of transmission through the first transmission link and the second transmission link, so that a data stream is transmitted through the first transmission link that is restored to normal. This ensures reliability of data stream transmission and, in a case in which a packet loss rate is reduced, can further ensure balance between transmission rates of transmission links between the first communication device and the second communication device, thereby effectively improving bandwidth utilization between the first communication device and the second communication device.

Based on the first aspect, in an optional implementation, the first sending module includes a first optical module, the second sending module includes a second optical module, and the first optical module and the second optical module are separately connected to the second communication device through an optical fiber. That the first communication device sends the first data sub-stream to the first sending module through the sending port includes: The first communication device sends the first data sub-stream to the first optical module through the sending port, where the first optical module performs electrical-to-optical conversion on the first data sub-stream to obtain a first optical signal, and sends the first optical signal to the second communication device. That the first communication device sends the second data sub-stream to the second sending module through the sending port includes: The first communication device sends the second data sub-stream to the second optical module through the sending port. The second optical module performs electrical-to-optical conversion on the second data sub-stream to obtain a second optical signal, and sends the second optical signal to the second communication device. In this implementation, the first communication device and the second communication device are used in an optical communication system.

Based on the first aspect, in an optional implementation, the first sending module includes a first transmit antenna, and the second sending module includes a second transmit antenna. That the first communication device sends the first data sub-stream to the first sending module through the sending port includes: The first communication device sends the first data sub-stream to the first transmit antenna through the sending port, where the first transmit antenna converts the first data sub-stream into a first electromagnetic wave, and radiates the first electromagnetic wave to the second communication device. That the first communication device sends the second data sub-stream to the second sending module through the sending port includes: The first communication device sends the second data sub-stream to the second transmit antenna. The second transmit antenna converts the second data sub-stream into a second electromagnetic wave, and radiates the second electromagnetic wave to the second communication device. In this implementation, the first communication device and the second communication device are used in a wireless communication system.

Based on the first aspect, in an optional implementation, the first sending module includes a first connector, the second sending module includes a second connector, and the first connector and the second connector are separately connected to the second communication device through a cable. That the first communication device sends the first data sub-stream to the first sending module through the sending port includes: The first communication device sends the first data sub-stream to the first connector through the sending port. That the first communication device sends the second data sub-stream to the second sending module through the sending port includes: The first communication device sends the second data sub-stream to the second connector through the sending port. In this implementation, the first communication device is connected to the second communication device through a cable.

A second aspect of embodiments of this application provides a data transmission method, where the method is applied to a second communication device, the second communication device includes a receiving port, the receiving port is separately connected to a first receiving module and a second receiving module, and the method includes: receiving, by the receiving port of the second communication device, a first data sub-stream from a first communication device through the first receiving module; and receiving, by the receiving port of the second communication device, a second data sub-stream from the first communication device through the second receiving module, where the first data sub-stream and the second data sub-stream are two of M data sub-streams, M is any integer not less than 2, the M data sub-streams are from a same sending port of the first communication device, and a transmission link on which the first receiving module is located is different from a transmission link on which the second receiving module is located. For descriptions of beneficial effects of this aspect, refer to the descriptions shown in the first aspect. Details are not described again.

Based on the second aspect, in an optional implementation, the receiving port is connected to the first receiving module through a first receiving circuit, and the receiving port is connected to the second receiving module through a second receiving circuit. That the receiving port of the second communication device receives the first data sub-stream from the first communication device through the first receiving module includes: The receiving port of the second communication device receives the first data sub-stream from the first receiving module through the first receiving circuit. That the receiving port of the second communication device receives the second data sub-stream from the first communication device through the second receiving module includes: The receiving port of the second communication device receives the second data sub-stream from the second receiving module through the second receiving circuit.

Based on the second aspect, in an optional implementation, after the receiving port of the second communication device receives the first data sub-stream from the first communication device through the first receiving module, and the receiving port of the second communication device receives the second data sub-stream from the first communication device through the second receiving module, the method further includes: The second communication device combines the first data sub-stream and the second data sub-stream into a target data stream.

Based on the second aspect, in an optional implementation, that the receiving port of the second communication device receives the second data sub-stream from the first communication device through the second receiving module includes: The second communication device detects that a first transmission link is abnormal; and the receiving port of the second communication device receives the first data sub-stream and the second data sub-stream from the first communication device through the second receiving module, where the first transmission link is the transmission link on which the first receiving module is located, and the first transmission link is connected between the first communication device and the second communication device.

Based on the second aspect, in an optional implementation, the second communication device further includes a cross-connect unit. Before the receiving port of the second communication device receives the first data sub-stream from the first receiving module through the first receiving circuit, and the receiving port of the second communication device receives the second data sub-stream from the second receiving module through the second receiving circuit, the method further includes: The second communication device connects the first receiving circuit to the second receiving circuit through the cross-connect unit.

Based on the second aspect, in an optional implementation, that the second communication device connects the first receiving circuit to the second receiving circuit through the cross-connect unit includes: The second communication device detects that both a first transmission link and a second transmission link are normal, where the first transmission link and the second transmission link are separately connected between the first communication device and the second communication device, the first transmission link is the transmission link on which the first receiving module is located, and the second transmission link is the transmission link on which the second receiving module is located.

Based on the second aspect, in an optional implementation, before the receiving port of the second communication device receives the second data sub-stream from the second receiving module through the second receiving circuit, the method further includes: The second communication device detects that the first transmission link is abnormal, where the first transmission link is the transmission link on which the first receiving module is located, and the first transmission link is connected between the first communication device and the second communication device. The method further includes: The receiving port of the second communication device receives the first data sub-stream from the second receiving module through the second receiving circuit.

Based on the second aspect, in an optional implementation, the first receiving module includes a first optical module, the second receiving module includes a second optical module, the first optical module and the second optical module are separately connected to the first communication device through an optical fiber, and the receiving port of the second communication device is separately connected to the first optical module and the second optical module.

Based on the second aspect, in an optional implementation, the first receiving module includes a first receive antenna, the second receiving module includes a second receive antenna, and the receiving port of the second communication device is separately connected to the first receive antenna and the second receive antenna.

Based on the second aspect, in an optional implementation, the first receiving module includes a first connector, the second receiving module includes a second connector, the first connector and the second connector are separately connected to the first communication device through a cable, and the receiving port of the second communication device is separately connected to the first connector and the second connector.

A third aspect of embodiments of this application provides a communication device, including a board, a first sending module, and a second sending module, where a sending port of the board is separately connected to the first sending module and the second sending module, and a transmission link on which the first sending module is located is different from a transmission link on which the second sending module is located; the board is configured to divide a target data stream into M data sub-streams, where M is any integer not less than 2, and the M data sub-streams include a first data sub-stream and a second data sub-stream; and the sending port is configured to send the first data sub-stream to the first sending module, where the first sending module is configured to send the first data sub-stream to another communication device; and the sending port is configured to send the second data sub-stream to the second sending module, where the second sending module is configured to send the second data sub-stream to the another communication device. For descriptions of beneficial effects of this aspect, refer to the descriptions shown in the first aspect. Details are not described again.

Based on the third aspect, in an optional implementation, the sending port is connected to the first sending module through a first sending circuit, and the sending port is connected to the second sending module through a second sending circuit.

Based on the third aspect, in an optional implementation, the board is further configured to detect that a first transmission link is abnormal, where the first transmission link is the transmission link on which the first sending module is located, and the first transmission link is connected between the communication device and the another communication device; and the sending port is further configured to send at least one portion of the first data sub-stream to the second sending module, where the second sending module is configured to send the first data sub-stream and the second data sub-stream to the another communication device.

Based on the third aspect, in an optional implementation, the communication device further includes a cross-connect unit, the cross-connect unit is connected to the first sending circuit and the second sending circuit, and the cross-connect unit is configured to connect the first sending circuit to the second sending circuit.

A fourth aspect of embodiments of this application provides a communication device, including a housing, where the housing includes a board inside, and the board includes a sending port. The housing is configured to: insert and fasten the first sending module and the second sending module. A sending port of the board is separately connected to the first sending module and the second sending module, where a transmission link on which the first sending module is located is different from a transmission link on which the second sending module is located; the board is configured to divide a target data stream into M data sub-streams, where M is any integer not less than 2, and the M data sub-streams include a first data sub-stream and a second data sub-stream; the sending port is configured to send the first data sub-stream to the first sending module, and the first sending module is configured to send the first data sub-stream to another communication device; and the sending port is configured to send the second data sub-stream to the second sending module, and the second sending module is configured to send the second data sub-stream to the another communication device. For descriptions of beneficial effects of this aspect, refer to the descriptions shown in the first aspect. Details are not described again.

A fifth aspect of embodiments of this application provides a communication device, including a board, a first receiving module, and a second receiving module, where a receiving port of the board is separately connected to the first receiving module and the second receiving module, and a transmission link on which the first receiving module is located is different from a transmission link on which the second receiving module is located; the receiving port is configured to receive a first data sub-stream from another communication device through the first receiving module; and the receiving port is further configured to receive a second data sub-stream from the another communication device through the second receiving module, where the first data sub-stream and the second data sub-stream are two of M data sub-streams, M is any integer not less than 2, the M data sub-streams are from a same sending port of the another communication device, and the transmission link on which the first receiving module is located is different from the transmission link on which the second receiving module is located. For descriptions of beneficial effects of this aspect, refer to the descriptions shown in the first aspect. Details are not described again.

Based on the fifth aspect, in an optional implementation, the receiving port is connected to the first receiving module through a first receiving circuit, and the receiving port is connected to the second receiving module through a second receiving circuit.

Based on the fifth aspect, in an optional implementation, the communication device further includes a cross-connect unit, the cross-connect unit is connected to the first receiving circuit and the second receiving circuit, and the cross-connect unit is configured to connect the first receiving circuit to the second receiving circuit.

A sixth aspect of embodiments of this application provides a communication device, including a housing, where the housing includes a board inside. The board includes a receiving port. The housing is configured to: insert and fasten a first receiving module and a second receiving module, where the receiving port of the board is separately connected to the first receiving module and the second receiving module, and a transmission link on which the first receiving module is located is different from a transmission link on which the second receiving module is located; and the board is configured to: receive a first data sub-stream from another communication device through the first receiving module; and receive a second data sub-stream from the another communication device through the second receiving module, where the first data sub-stream and the second data sub-stream are two of M data sub-streams, and M is any integer not less than 2. For descriptions of beneficial effects of this aspect, refer to the descriptions shown in the first aspect. Details are not described again.

A seventh aspect of embodiments of this application provides a digital processing chip, including a processing chip and a memory. The memory and the processing chip are interconnected through a line. The memory stores instructions. The processing chip is configured to perform the method according to any one of the implementations of the first aspect and the second aspect.

An eighth aspect of embodiments of this application provides a computer storage medium, including instructions. When the instructions are run on a computer, the computer is enabled to perform the method according to any one of the implementations of the first aspect and the second aspect.

A ninth aspect of embodiments of this application provides a computer program product including instructions. When the computer program product runs on a computer, the computer is enabled to perform the method according to any one of the implementations of the first aspect and the second aspect.

A tenth aspect of embodiments of this application provides a communication system, where the communication system includes a first communication device and a second communication device, the first communication device is shown in the third aspect, and the second communication device is shown in the fifth aspect.

An eleventh aspect of embodiments of this application provides a communication system. The communication device includes a first communication device and a second communication device. The first communication device is shown in the fourth aspect, and the second communication device is shown in the sixth aspect. The communication device further includes a first sending module, a second sending module, a first receiving module, and a second receiving module. The sending port is separately connected to the first sending module and the second sending module. The receiving port is separately connected to the first receiving module and the second receiving module. The first sending module is connected to the first receiving module. The second sending module is connected to the second receiving module.

### BRIEF DESCRIPTION OF DRAWINGS

FIG. 1 is an example diagram of a structure of a communication system according to a first embodiment of this application;
FIG. 2 is a first step flowchart of a data transmission method according to this application;
FIG. 3 is an example diagram of a structure of an existing communication system;
FIG. 4 is a second step flowchart of a data transmission method according to this application;
FIG. 5 is an example diagram in which an abnormality occurs on a transmission link shown in FIG. 1;
FIG. 6a is an example diagram in which an abnormality occurs on a transmission link shown in FIG. 3;
FIG. 6b is an example diagram of a time sequence of a data stream shown in FIG. 6a;
FIG. 7A and FIG. 7B are a third step flowchart of a data transmission method according to this application;
FIG. 8 is an example diagram of a structure a communication system according to a second embodiment of this application;
FIG. 9 is an example diagram of a cross-connect unit shown in FIG. 8;
FIG. 10A and FIG. 10B are a fourth step flowchart of a data transmission method according to this application;
FIG. 11 is a fifth step flowchart of a data transmission method according to this application;
FIG. 12A and FIG. 12B are a sixth step flowchart of a data transmission method according to this application;
FIG. 13 is an example diagram of a structure of a communication system according to a third embodiment of this application;
FIG. 14 is an example diagram of a structure of a communication system according to a fourth embodiment of this application;
FIG. 15 is an example diagram of a structure of a communication system according to a fifth embodiment of this application; and
FIG. 16 is an example diagram of a structure of a communication system according to a sixth embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

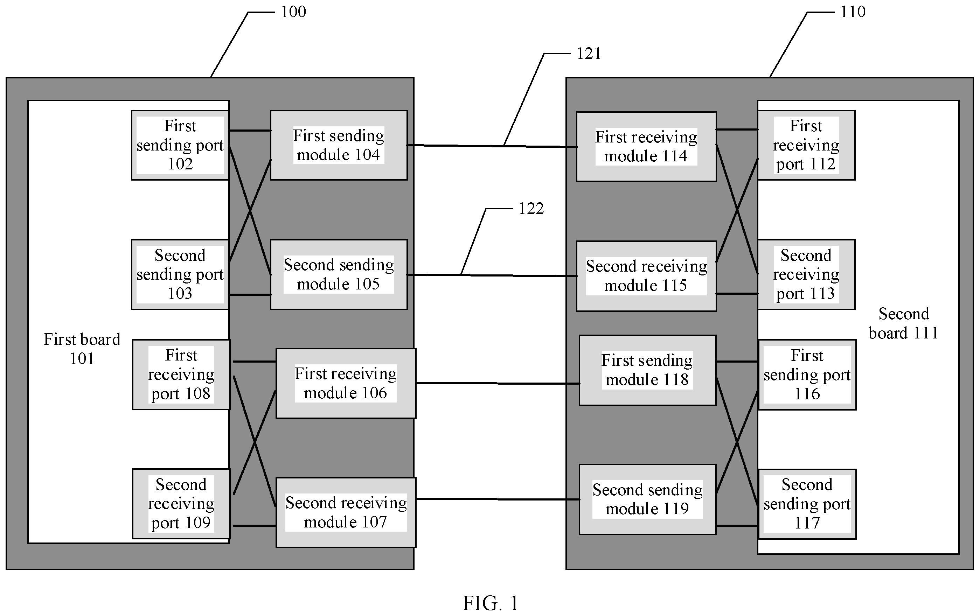

An embodiment of this application provides a data transmission method, to effectively improve reliability of data transmission and reduce a packet loss rate in a data transmission process. When a transmission link is abnormal, zero packet loss can be even implemented together with link-level retransmission. To better understand the method shown in this embodiment, a structure of a communication system to which the method shown in this embodiment of this application is applicable is first described with reference to FIG. 1. FIG. 1 is an example diagram of a structure of a communication system according to a first embodiment of this application. The communication system includes a first communication device 100 and a second communication device 110. In FIG. 1, an example in which the communication system is specifically an optical communication system is used. In this case, the first communication device 100 is connected to the second communication device 110 through an optical fiber. A quantity of communication devices included in the optical communication system is not limited in this example. A networking type of the optical communication system is not limited in this example. For example, the optical communication system may use chain networking, ring networking, or star networking. A type of a network to which the optical communication system is used is not limited in this example. For example, both the first communication device 100 and the second communication device 110 may be switches. For another example, if the optical communication system shown in this example is used in a passive optical network (passive optical network, PON), one of the first communication device 100 and the second communication device 110 may be an optical communication system unit (optical network unit, ONU) or an optical communication system terminal (optical network terminal, ONT), and the other of the first communication device 100 and the second communication device 110 may be an optical line terminal (optical line terminal, OLT). If the optical communication system is used in an optical transport network (optical transport network, OTN), both the first communication device 100 and the second communication device 110 may be OTN devices. The optical communication system shown in this example may be further used in a data center network (data1 center network, DCN), a metropolitan area network, or the like. This is not specifically limited. The first communication device 100 is used as an example. A device type of the first communication device 100 is not limited in this example. For example, the first communication device 100 may be an optical transmission device, an optical access device, a router, a wireless base station, a wireless remote access device, a wireless baseband signal processing device, or the like, or may be a computing server (usually referred to as a server), a high-performance computer (high-performance computer, HPC), a storage server, a memory resource pool, or the like. In this example, descriptions of the type of the first communication device 100 are optional examples, provided that the first communication device 100 has an electrical-to-optical conversion function and has an optical interface that can be connected to an optical fiber. For descriptions of a type of the second communication device 110, refer to the descriptions of the type of the first communication device 100. Details are not described again.

The first communication device 100 is used as an example. The first communication device 100 specifically includes a first board 101. The first board 101 may be an integrated device with the first communication device 100, or the first board 101 is an independent pluggable board in the first communication device 100. In this case, the first board 101 is one of a plurality of boards included in the first communication device. A quantity of first boards 101 included in the first communication device 100 is not limited in embodiments. The first board 101 may be configured to perform data processing, or configured to perform data cross-connection, or configured to perform an auxiliary function. The auxiliary function may be an external alarm, external clock access, or the like. To implement the foregoing functions, the first board 101 includes a processor, a memory, and the like. A type of the processor is not limited in embodiments. For example, the processor may include one or more chips or one or more integrated circuits. For another example, the processor may include one or more of one or more switching chips, a neural network processor (neural processing unit, NPU), an optical digital signal processor (optical digital signal processor, oDSP), a field-programmable gate array (field-programmable gate array, FPGA), an application-specific integrated circuit (application-specific integrated circuit, ASIC), a system on chip (system on chip, SoC), a central processing unit (central processor unit, CPU), a network processor (network processor, NP), a microcontroller unit (microcontroller unit, MCU), a programmable processor (programmable logic device, PLD), a network interface card chip, a storage interface chip, or another integrated chip. Details are not described. The processor of the first board 101 includes N sending ports, where N is any integer not less than 1. In this embodiment, an example in which a value of N is 2 is used. In this case, the processor of the first board 101 includes a first sending port 102 and a second sending port 103. The first sending port 102 is used as an example. The first sending port 102 is a physical interface configured to connect to another communication device. The first sending port 102 includes a processing module. For descriptions of a type of the processing module, refer to the descriptions of the type of the processor included in the first board 101. Details are not described again. A structure of the first sending port 102 is not limited in embodiments. The first sending port 102 can establish a link for data transmission with the second communication device 110. For descriptions of the second sending port 103 included in the first board 101, refer to the descriptions of the first sending port 102. Details are not described again.

The first communication device 100 further includes a first sending module 104 and a second sending module 105. Because the communication system shown in this embodiment is an optical communication device, the first sending module 104 and the second sending module 105 are optical modules respectively. The optical module may also be referred to as an optical-to-electrical conversion module, an optical transceiver module, or the like. A quantity of sending modules included in the first communication device 100 is not limited in embodiments. Specifically, the first sending port 102 includes i first electrical interfaces and j second electrical interfaces. i and j are respectively any integers greater than 1. The i first electrical interfaces are separately connected to the first sending module 104, and the j second electrical interfaces are separately connected to the second sending module 105. For example, the first board 101 includes a printed circuit board (printed circuit board, PCB). Both the first sending port 102 and the first sending module 104 are encapsulated on the PCB. Therefore, the first electrical interface is connected to the first sending module 104 through a conductive trace on the PCB. Descriptions of a connection between the first electrical interface and the first sending module 104 in this embodiment are optional examples, and are not limited. In this example, i and j are both 2. In this case, the first sending port 102 is connected to the first sending module 104 through two first sending circuits, and the first sending port 102 is connected to the second sending module 105 through two second sending circuits. Both the first sending circuit and the second sending circuit are circuits formed by conductive traces on the PCB. In the four sending circuits connected to the first sending port 102, a rate of each sending circuit is 112 gigabits per second (Gbps). It should be noted that, in this embodiment, an example in which rates of sending circuits connected to the first sending port 102 are the same is used. In another example, rates of different sending circuits connected to the first sending port 102 may be different. This is not specifically limited. For descriptions of a connection between the second electrical interface and the second sending module 105, refer to the descriptions of the connection between the first electrical interface and the first sending module 104. Details are not described again. Similarly, the second sending port 103 includes K first electrical interfaces and L second electrical interfaces, where K and L are any integers greater than 1. The K first electrical interfaces are connected to the first sending module 104, and the L second electrical interfaces are connected to the second sending module 105. It may be understood that a same sending module in this embodiment is connected to a plurality of sending ports. For example, the first sending module 104 is connected to the i first electrical interfaces of the first sending port 102 and the K first electrical interfaces of the second sending port 103. The first sending module 104 is connected to the second communication device through i+K optical fibers. In this embodiment, an example in which the i+K optical fibers are located in a same optical cable is used. In another example, the i+K optical fibers may be located in a plurality of optical cables. A quantity of optical cables connected between the first communication device 100 and the second communication device 110 is not limited. A quantity of sending ports connected to a same sending module is not limited in embodiments.

The second communication device 110 includes a second board 111, a first receiving port 112, and a second receiving port 113. For descriptions of the second board 111, the first receiving port 112, and the second receiving port 113, refer to the descriptions of the first board 101 and the first sending port 102. Details are not described again. The first receiving port 112 of the second board 111 is separately connected to a first receiving module 114 and a second receiving module 115, and the second receiving port 113 is separately connected to the first receiving module 114 and the second receiving module 115. The first receiving port 112 of the second board 111 is connected to the first receiving module 114 through a receiving circuit, and the first receiving port 112 is connected to the second receiving module 115 through a receiving circuit. For descriptions of the receiving circuit, refer to the descriptions of the sending circuit of the first communication device 100. Details are not described again. For descriptions of receiving modules included in the second communication device 110, refer to the descriptions of the sending modules included in the first communication device 100. Details are not described again.

In this embodiment, an example in which the first sending module 104 is connected to the first receiving module 114 through a first optical fiber 121, and the second sending module 105 is connected to the second receiving module 115 through a second optical fiber 122 is used. A quantity of first optical fibers 121 and second optical fibers 122 is not limited in embodiments. For example, the first sending module 104 may be connected to the first receiving module 114 through at least one optical fiber. In this embodiment, an example in which the first sending module 104 is directly connected to the first receiving module 114 through the first optical fiber 121 is used. In another example, at least one optical amplifier station configured to amplify optical power, at least one scheduling station configured to schedule a transmission direction of an optical signal, or the like may be further connected between the first sending module 104 and the first receiving module 114. This is not specifically limited. A quantity and types of first optical fibers 121 are not limited in embodiments. For example, if there are four first optical fibers 121, the first sending module 104 and the first receiving module 114 may be connected through a short-range 4-channel multi-mode fiber (short-range 4 multi-mode fiber, SR4).

In the foregoing example, an example in which the first communication device 100 is used as a sender of a data stream, and the second communication device 110 is used as a receiver of the data stream is used, and this is not limited. Alternatively, the first communication device 100 may be used as a receiver of a data stream, and the second communication device 110 may be used as a sender of the data stream. Therefore, the second board 111 of the second communication device 110 further includes a first sending port 116 and a second sending port 117, and the second communication device 110 further includes a first sending module 118 and a second sending module 119. For specific descriptions, refer to the descriptions of the first sending port 102, the second sending port 103, the first sending module 104, and the second sending module 105 of the first communication device 100. Details are not described again. The first communication device 100 further includes a first receiving port 108, a second receiving port 109, a first receiving module 106, and a second receiving module 107. For specific descriptions, refer to descriptions of the first receiving port 112, the second receiving port 113, the first receiving module 114, and the second receiving module 115 included in the second communication device 110. Details are not described again. The first communication device 100 is used as an example. A sending port for sending a data stream and a receiving port for receiving the data stream are physically different ports. In another example, a sending port for sending a data stream and a receiving port for receiving the data stream may be physically the same port. For example, the first sending port 102 and the first receiving port 108 are divided based on logical functions, and may be physically the same port. Similarly, the second sending port 103 and the second receiving port 109 are divided based on logical functions, and may be physically the same port. For descriptions of ports of the second communication device 110, refer to the descriptions of ports of the first communication device 100. Details are not described again.

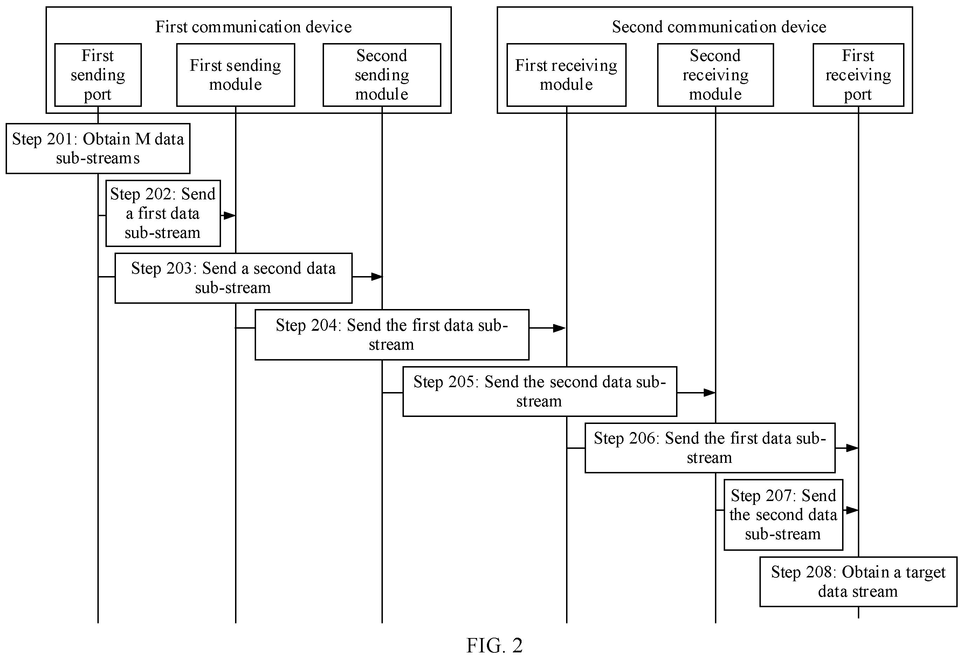

With reference to FIG. 1 and FIG. 2, a process of performing the data transmission method provided in embodiments of this application is described. FIG. 2 is a first step flowchart of the data transmission method according to this application.

Step 201: The first sending port obtains M data sub-streams.

The processor of the first board 101 includes the first sending port 102 and the second sending port 103. The processor of the first board 101 obtains a target data stream, where the target data stream includes a plurality of data units. A destination address carried in each data unit is the second communication device, or an ultimate address to which the data unit needs to be switched through the second communication device. The destination address may be a media access control (media access control address, MAC) address for finally receiving the M data sub-streams. The data unit may be a data packet or a data frame.

The processor of the first board divides the target data stream into M data sub-streams. Specifically, the first sending port 102 included in the processor of the first board is connected to i first sending modules and K second sending modules. In this case, the first communication device divides the target data stream into M (M=i+K) data sub-streams. In this example, M=i+K is used as an example. In another example, M may alternatively be any integer that is less than i+K and greater than 2. In this embodiment, an example in which the M data sub-streams include a first data sub-stream and a second data sub-stream is used. A quantity of first data sub-streams and a quantity of second data sub-streams are not limited in embodiments. For example, if both i and K are 2, the first board divides the target data stream into four data sub-streams. The four data sub-streams specifically include two first data sub-streams and two second data sub-streams, and a rate of each data sub-stream is 112 Gbps.

The processor of the first board 101 sends or forwards the first data sub-stream and the second data sub-stream to the first sending port 102. The first sending port 102 sends the first data sub-stream to the first sending module 104, and sends the second data sub-stream to the second sending module 105. For example, the processor of the first board sets a first identifier in the first data sub-stream obtained through division, and sets a second identifier in the second data sub-stream. The first identifier corresponds to the first sending module 104, and the second identifier corresponds to the second sending module 105. In this case, the first sending port 102 sends the first data sub-stream to the first sending module 104 based on the first identifier, and sends the second data sub-stream to the second sending module 105 based on the second identifier.

In the foregoing example, the processor of the first board 101 divides the target data stream to obtain the M data sub-streams. In another example, the processor of the first board 101 directly sends the target data stream to the first sending port 102. A processing module included in the first sending port 102 divides the target data stream to obtain the M data sub-streams. For descriptions of a process in which the first sending port 102 divides the target data stream, refer to the descriptions of dividing the target data stream by the processor of the first board 101. Details are not described again.

Step 202: The first sending port sends the first data sub-stream to the first sending module.

Step 203: The first sending port sends the second data sub-stream to the second sending module.

In this embodiment, when the first sending port 102 of the processor of the first board 101 obtains the first data sub-stream and the second data sub-stream, the first sending port 102 sends the first data sub-stream to the first sending module 104. The first sending port 102 further sends the second data sub-stream to the second sending module 105. For descriptions of a connection between the first sending port 102 and each of the first sending module 104 and the second sending module 105, refer to the descriptions corresponding to FIG. 1. Details are not described again. Specifically, the first sending port 102 is connected to the first sending module 104 through the first sending circuit. In this case, the first sending port 102 sends the first data sub-stream to the first sending module 104 through the first sending circuit. For descriptions of the first sending circuit, refer to the descriptions corresponding to FIG. 1. Details are not described again. Similarly, the first sending port 102 is connected to the second sending module 105 through the second sending circuit. In this case, the first sending port 102 sends the second data sub-stream to the second sending module 105 through the second sending circuit. For descriptions of the second sending circuit, refer to the descriptions corresponding to FIG. 1. Details are not described again.

In this embodiment, an example in which a rate of the first data sub-stream is the same as a rate of the second data sub-stream is used. For example, rates of two first data sub-streams are separately 25% of a rate of the target data stream, and rates of two second data sub-streams are separately 25% of the rate of the target data stream. This effectively ensures balance between rates received by the first sending module and the second sending module, and improves a throughput of the communication system.

A time sequence of performing step 202 and step 203 is not limited in embodiments.

Step 204: The first sending module sends the first data sub-stream to the second communication device.

It can be learned from FIG. 1 that the first sending module 104 is an optical module. When receiving the first data sub-stream, the first sending module 104 performs electrical-to-optical conversion on the first data sub-stream to obtain a first optical signal. The first sending module 104 is connected to the first receiving module 114 through the first optical fiber 121. In this case, the first sending module 104 sends the first optical signal to the first receiving module 114 through the first optical fiber 121.

In this embodiment, an example in which the first sending module 104 obtains two first data sub-streams from different sending ports, and separately performs electrical-to-optical conversion on the two first data sub-streams to obtain two first optical signals is used. In this case, an example in which two optical fibers are connected between the first sending module 104 and the first receiving module 114 is used. The two optical fibers are respectively used to transmit two first optical signals. In another example, the first communication device 100 may further include a wavelength division multiplexer (wavelength division multiplexer, WDM) connected to the first sending module 104. The WDM is configured to: perform wavelength division multiplexing on the two first optical signals to obtain one optical signal, and transmit the optical signal to the second communication device 110 through one first optical fiber 121.

Step 205: The second sending module sends the second data sub-stream to the second communication device.

The second sending module 105 is also an optical module. When receiving the second data sub-stream, the second sending module 105 performs electrical-to-optical conversion on the second data sub-stream to obtain a second optical signal. The second sending module 105 is connected to the second receiving module 115 through the second optical fiber 122. In this case, the second sending module 105 sends the second optical signal to the second receiving module 115 through the second optical fiber 122. For descriptions of sending the second data sub-stream to the second communication device by the second sending module, refer to the descriptions of sending the first data sub-stream to the second communication device by the first sending module in step 204. Details are not described again.

It can be learned in combination with step 204 and step 205 that a transmission link on which the first sending module 104 is located is different from a transmission link on which the second sending module 105 is located. Specifically, the first sending module 104 is located on a first transmission link, and the second sending module 105 is located on a second transmission link. The first transmission link specifically includes the first sending module 104, the first optical fiber 121, and the first receiving module 114. The second transmission link specifically includes the second sending module 105, the second optical fiber 122, and the second receiving module 115. It may be understood that the first transmission link and the second transmission link shown in this embodiment are different from each other and are independent of each other. Optionally, the first transmission link shown in this embodiment may further include a circuit between the first sending module 104 and the first sending port of the processor. The second transmission link may further include a circuit between the second sending module 105 and the first sending port of the processor. The first transmission link and the second transmission link are not limited in embodiments, provided that the first data sub-stream and the second data sub-stream can be transmitted to the second communication device respectively through the first transmission link and the second transmission link.

A time sequence of performing step 204 and step 205 is not limited in embodiments.

Step 206: The first receiving module sends the first data sub-stream to the first receiving module.

The first receiving module 114 receives the first optical signal through the first optical fiber 121, and performs optical-to-electrical conversion on the first optical signal to obtain the first data sub-stream. The first receiving module 114 shown in this embodiment may have a plurality of first receiving channels, and each first receiving channel is configured to perform optical-to-electrical conversion on different first optical signals to obtain the first data sub-stream. The first receiving communication is configured to send the first data sub-stream to the connected first receiving port. For example, the first receiving module 114 has two first receiving channels, and each first receiving channel is separately connected to the first optical fiber 121 and the first receiving port 112. The first receiving channel is configured to: receive the first optical signal from the first optical fiber 121, and perform optical-to-electrical conversion on the first optical signal to obtain the first data sub-stream. The first receiving channel is configured to send the first data sub-stream to the first receiving port 112.

Step 207: The second receiving module sends the second data sub-stream to the first receiving port.

The second receiving module 115 shown in this embodiment has a plurality of second receiving channels, and each second receiving channel is configured to perform optical-to-electrical conversion on different second optical signals to obtain the second data sub-stream. The second transmission channel is configured to send the second data sub-stream to the corresponding receiving port. For example, the second receiving module 115 has two second receiving channels, and each second receiving channel is separately connected to the second optical fiber 122 and the first receiving port 112. The second receiving channel is configured to: receive the second optical signal from the second optical fiber 122, and perform optical-to-electrical conversion on the second optical signal to obtain the second data sub-stream. The second receiving channel is configured to transmit the second data sub-stream to the first receiving port 112.

The first receiving module shown in this embodiment is connected to the first receiving port through the first receiving circuit. The second receiving module is connected to the first receiving port through the second receiving circuit. For descriptions of the first receiving circuit and the second receiving circuit, refer to the descriptions corresponding to FIG. 1. Details are not described again.

It can be learned in combination with step 207 and step 208 that the first transmission link on which the first receiving module 114 is located is different from the second transmission link on which the second receiving module 115 is located. For descriptions of the first transmission link and the second transmission link, refer to the foregoing embodiment. Details are not described again.

Step 208: The first receiving port combines the first data sub-stream and the second data sub-stream into a target data stream.

When the first receiving port 112 of the second board 111 receives the first data sub-stream from the first receiving module 114 and the second data sub-stream from the second receiving module 115, the first receiving port 112 can sort the first data sub-stream and the second data sub-stream, to obtain the target data stream. For example, each data unit included in the data stream is a data frame. The first receiving port 112 can perform sorting based on a frame number carried in a frame header of the first data sub-stream and a frame number carried in a frame header of the second data sub-stream, to obtain the target data stream through sorting based on a time sequence indicated by the frame numbers. In this embodiment, an example in which the first receiving port 112 sorts the first data sub-stream and the second data sub-stream is used, and this is not limited. For example, the first receiving port 112 may send the first data sub-stream and the second data sub-stream to the processor of the second board 111, and the processor included in the second board 111 combines the first data sub-stream and the second data sub-stream. For descriptions of the combination, refer to the descriptions of obtaining the target data stream through combination by the first receiving port 112. Details are not described again.

It should be noted that step 208 is an optional step. The second communication device may not combine data sub-streams, but directly continue to forward or receive each data sub-stream based on a destination address carried in the data sub-stream. For example, if the second communication device 110 is a switch, the switch is further connected to another communication device, for example, the switch is connected to any type of communication device like an NPU. When both a destination address carried in the first data sub-stream and a destination address carried in the second data sub-stream are an address of the NPU, the first receiving port 112 does not need to perform a data stream combination process, but directly sends the first data sub-stream and the second data sub-stream to the NPU based on the destination address

In this embodiment, for example, both the first receiving module and the second receiving module are connected to a same first receiving port 112 of the processor of the second board. In another example, the first receiving module and the second receiving module may be connected to different receiving ports of the processor of the second board. For example, the first receiving module may be connected to the first receiving port of the processor of the second board, and the second receiving module may be connected to the second receiving port of the processor of the second board. The processor of the second board receives the first data sub-stream and the second data sub-stream respectively through the first receiving port and the second receiving port. A structure of the second communication device is not limited in embodiments.

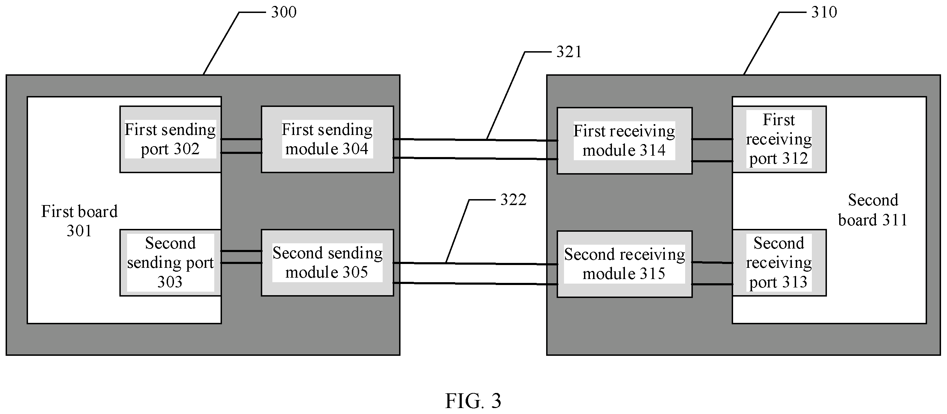

To better understand beneficial effects of the method provided in this embodiment, an existing communication system is first described with reference to FIG. 3. FIG. 3 is an example diagram of a structure of the existing communication system. The communication system shown in FIG. 3 includes a first communication device 300 and a second communication device 310. For descriptions of types of the first communication device 300 and the second communication device 310, refer to the descriptions corresponding to FIG. 1. Details are not described again. The first communication device 300 includes a first board 301, and a first sending port 302 of the first board 301 is connected only to a first sending module 304. A second sending port 303 of the first board 301 is connected only to a second sending module 305. It can be learned by comparing FIG. 1 with FIG. 3 that, in the existing first communication device 300, a same sending port of the first board 301 is connected to only one sending module. However, in the first communication device 100 shown in FIG. 1, a same sending port of the first board 301 is connected to a plurality of sending modules. The second communication device 310 includes a second board 311. A first receiving port 312 of the second board 311 is connected to a first receiving module 314. A second receiving port 313 of the second board 311 is connected to a second receiving module 315. It can be learned by comparing FIG. 1 with FIG. 3 that, in the existing second communication device 310, a same receiving port of the second board 311 is connected to only one receiving module. However, in the second communication device 310 shown in FIG. 1, a same receiving port of the second board 311 is connected to a plurality of receiving modules. For descriptions of the sending ports, the sending modules, the receiving ports, and the receiving modules, refer to the descriptions corresponding to FIG. 1. Details are not described again.

Based on the existing communication system shown in FIG. 3, when the first sending port 302 obtains a target data stream to be sent to the second communication device, the first sending port 302 sends the target data stream to the first sending module 304. In comparison with the communication system corresponding to FIG. 1, there is no connection relationship between the first sending port 302 and the second sending module 305. In this case, the first sending port 302 does not send a data stream to the second sending module 305. The first sending module 304 performs electrical-to-optical conversion on the target data stream from the first sending port 302 to obtain a target optical signal. The first sending module 304 sends the target optical signal to the first receiving module 314 through a first optical fiber 321. The first receiving module 314 performs optical-to-electrical conversion on the target optical signal to obtain a target data stream, and sends the target data stream to the first receiving port 312.

However, in the existing communication system, a first transmission link includes the first sending module 304, the first optical fiber 321, and the first receiving module 314. If the first transmission link is abnormal, the target data stream cannot be transmitted to the second communication device through the first transmission link, thereby reducing reliability of transmitting the target data stream.

However, according to the method shown in this embodiment, the first communication device divides the target data stream to obtain a first data sub-stream and a second data sub-stream. The first data sub-stream is sent to the second communication device through the first sending module, and the second data sub-stream is sent to the second communication device through the second sending module, so that the target data stream is transmitted to the second communication device through different transmission links. Different transmission links include different sending modules, receiving modules, and optical fibers. In this case, when any type of abnormality occurs on either of the first transmission link and the second transmission link, traffic of the target data stream sent by the first communication device to the second communication device is not interrupted. For example, the first data sub-stream in the target data stream is sent to the second communication device through the first transmission link, and the second data sub-stream in the target data stream is sent to the second communication device through the second transmission link. If the first sending module in the first transmission link is faulty, but the second transmission link works normally, it can be ensured that at least one portion of the target data stream (namely, the second data sub-stream) can be successfully sent to the second communication device, thereby improving reliability of transmitting the target data stream and effectively reducing a packet loss rate during transmission of the target data stream. Still as shown in FIG. 1, for example, the first sending module 104 is faulty. However, because the second data sub-stream is sent to the second communication device 110 through the second transmission link, the first receiving port 112 can still successfully receive the second data sub-stream from the second receiving module 115, thereby improving reliability of transmitting the data stream from the first communication device 100 to the second communication device.

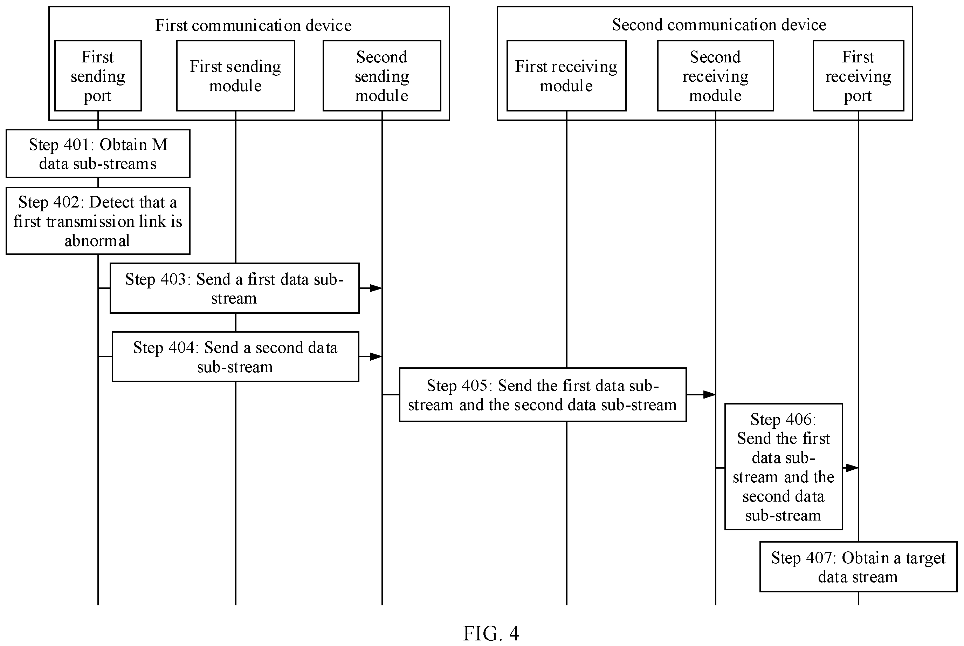

With reference to the embodiment shown in FIG. 4, the following describes how to transmit a data stream if an abnormality occurs on the first transmission link shown in FIG. 1. FIG. 4 is a second step flowchart of the data transmission method according to this application.

Step 401: The first sending port obtains M data sub-streams.

For descriptions of a process of performing step 401 shown in this embodiment, refer to the step 201 corresponding to FIG. 2. Details are not described again.

Step 402: The first sending port detects that a first transmission link is abnormal.

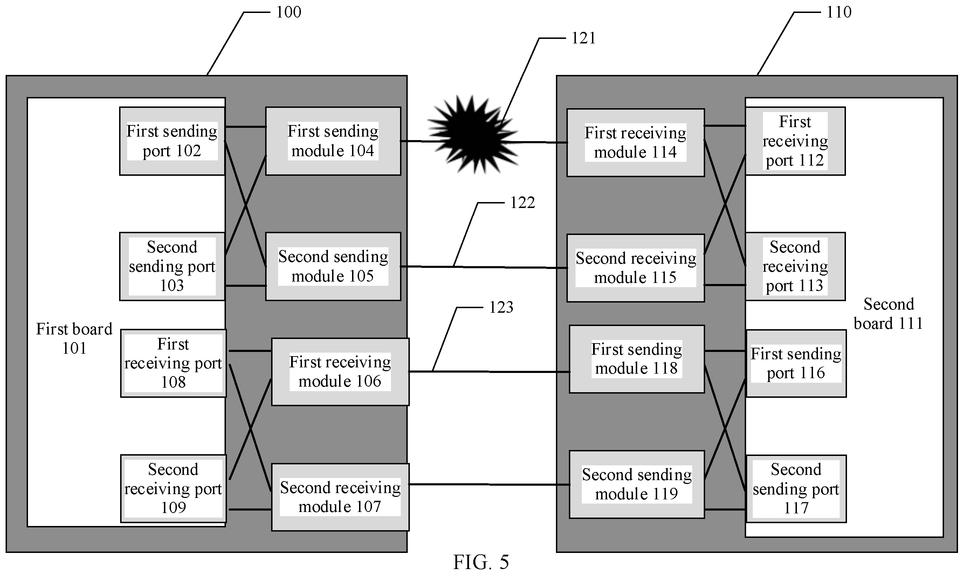

FIG. 5 is an example diagram in which an abnormality occurs on the transmission link shown in FIG. 1. The first transmission link includes the first sending module 104, the first optical fiber 121, and the first receiving module 114. For specific descriptions of the first transmission link, refer to the descriptions that correspond to FIG. 1 and FIG. 2. Details are not described again. That the first transmission link is abnormal includes at least one of the following cases:
An optical port of the first transmission link is intermittently disconnected, performance of the first sending module 104 deteriorates, and performance of the first receiving module 114 deteriorates. A case in which the first transmission link is abnormal is not limited in embodiments. As long as the first transmission link is abnormal, the first receiving module 114 cannot receive a data stream, or a bit error rate of a received data stream is excessively high, or a packet loss rate of a received data stream is excessively high. The performance deterioration of the first sending module 104 may mean that a temperature of the first sending module 104 is excessively high, the first sending module 104 is aged, a component defect occurs, and the like. The performance deterioration of the first sending module 104 may cause quality degradation of an optical signal emitted by the first sending module 104, unstable output optical power, drift of a wavelength emitted by the first sending module 104, and the like. For descriptions of the performance deterioration of the first receiving module 114, refer to the descriptions of the performance deterioration of the first sending module 104. Details are not described again. A type of the intermittent disconnection of the optical port of the first transmission link is not limited in embodiments.

The intermittent disconnection of the optical port includes at least one of the following:
The first optical fiber 121 is damaged, optical attenuation (also referred to as energy attenuation of an optical quantum) of the first optical fiber 121 is excessively large, the first optical fiber 121 is excessively bent, the first optical fiber connector is damaged, a connection between the first optical fiber connector and the first optical fiber adapter is in poor contact, the second optical fiber connector is damaged, or a connection between the second optical fiber connector and the second optical fiber adapter is in poor contact. Two ends of the first optical fiber 121 are respectively connected to the first optical fiber connector and the second optical fiber connector. The first optical fiber connector is connected to a first optical fiber adapter of the first sending module 104. The second optical fiber connector is connected to a second optical fiber adapter of the first receiving module 114.

The following describes an optional manner in which the first sending port detects that the first transmission link is abnormal.

### Optional manner 1

The first receiving module 114 of the second communication device 110 receives a first optical signal from the first optical fiber 121. For descriptions of the first optical signal, refer to the embodiment corresponding to FIG. 2. Details are not described again. The first receiving module 114 performs optical-to-electrical conversion on the first optical signal to obtain a first data sub-stream, and sends the first data sub-stream to the first receiving port 112. The first receiving port 112 detects the first data sub-stream, to detect whether an abnormality occurs on the first transmission link. In this embodiment, the first receiving port 112 detects whether a bit error rate of the first data sub-stream is greater than a bit error rate threshold. If yes, the first receiving port 112 determines that the first transmission link is abnormal. For another example, if the first receiving port 112 fails to perform forward error correction (forward error correction, FEC) decoding on the first data sub-stream, the first receiving port 112 determines that the first transmission link is abnormal. For another example, the first receiving port 112 detects whether a packet loss rate of the first data sub-stream is greater than a packet loss rate threshold. If yes, the first receiving port 112 determines that the first transmission link is abnormal. It should be noted that the descriptions of detecting, by the second receiving device, that the first transmission link is abnormal are not limited in embodiments. Alternatively, the first receiving port 112 may directly send the first data sub-stream to the processor of the second board 111, and the processor of the second board 111 detects, based on the first data sub-stream, whether the first transmission link is abnormal.

In this embodiment, if a third optical fiber 123 connected between the first receiving module 106 of the first communication device and the first sending module 118 of the second communication device is normal, the second communication device sends an abnormality indication message to the first communication device through the third optical fiber 123. The abnormality indication message indicates that the first transmission link is abnormal. For descriptions of a process in which the second communication device 110 sends the abnormality indication message to the first communication device 100, refer to the descriptions of sending the data stream by the first communication device 100 to the second communication device 110 corresponding to FIG. 2. Details are not described again. Specifically, the abnormality indication message carries an identifier of the first transmission link. In this case, the first board sends the abnormality indication message to the first sending port, and the first sending port determines, based on the abnormality indication message, that the first transmission link is abnormal. The first optical fiber 121 and the third optical fiber 123 shown in this embodiment may be located in a same optical cable, or the first optical fiber 121 and the third optical fiber 123 may be located in different optical cables. This is not specifically limited.

### Optional manner 2

The first communication device 100 has a local function of detecting whether the first transmission link is abnormal. For example, the first sending port of the processor of the first board detects, through heartbeat detection, whether an abnormality occurs on the first transmission link. The first sending port sends a heartbeat data packet to the second communication device 111 through the first transmission link. If the first transmission link is normal, the second communication device 110 can successfully receive the heartbeat data packet, and send a heartbeat response data packet to the first communication device through the third optical fiber 123. If the first sending port determines that the heartbeat response data packet is successfully received within duration counted by a timer, it indicates that the first transmission link is normal. If the first sending port determines that the heartbeat response data packet is not received within duration counted by a timer, it indicates that the first transmission link is abnormal. It should be noted that descriptions of locally detecting, by the first communication device 100, whether the first transmission link is abnormal are not limited in embodiments. It should be noted that, in this embodiment, for example, the first sending port detects whether the first transmission link is abnormal. In another example, the processor of the first board may detect whether the first transmission link is abnormal, and send, to the first sending port, an indication message indicating that the first transmission link is abnormal. This is not specifically limited.

Step 403: The first sending port sends the first data sub-stream to the second sending module.

In the embodiment corresponding to FIG. 2, the first transmission link is originally used to transmit the first data sub-stream. However, in this embodiment, the first sending port detects that the first transmission link is abnormal. In this case, if the first data sub-stream continues to be transmitted through the first transmission link, a bit error rate of transmission of the first data sub-stream is excessively high, and even transmission interruption occurs. Therefore, the first board shown in this embodiment switches a traffic (namely, the first data sub-stream) to be transmitted through the first transmission link to the second transmission link for transmission, so as to ensure that the first data sub-stream can be successfully sent to the second communication device 110, and implement zero packet loss during transmission of a target data stream together with a link-level retransmission mechanism. To switch the first data sub-stream from the first transmission link to the second transmission link for transmission, the first sending port 102 sends the obtained first data sub-stream to the second sending module 105. For example, the first sending port has two sending circuits in total, where a first sending circuit is connected to the first sending module, and a second sending circuit is connected to the second sending module. In this case, the first sending port can send a data stream to the second sending module through the second sending circuit.

The following describes several optional examples in which the first sending port sends the first data sub-stream to the second sending module together with a link-level retransmission mechanism.

### Example 1

When the first sending port detects that the first transmission link is abnormal, and the first data sub-stream has not been transmitted to the first transmission link, the first sending port directly sends the first data sub-stream to the second sending module.

### Example 2

The first data sub-stream includes a plurality of data units that are sequentially arranged, for example, a data unit 1, a data unit 2, ..., a data unit P-1, and a data unit P that are sequentially arranged based on a time sequence from front to back. When the first sending port detects that the first transmission link is abnormal, a portion of the first data sub-stream has been transmitted through the first transmission link. For example, a first data unit group in the first data sub-stream has been transmitted through the first transmission link, but a second data unit group has not been transmitted through the first transmission link. It may be understood that, in the first data sub-stream, the first data unit group is sorted before the second data unit group. Specifically, in the first data sub-stream, the data unit 1, the data unit 2 to the data unit P-1 are the first data unit group that has been transmitted through the first transmission link. The data unit P is the second data unit group that has not been transmitted through the first transmission link.

It is assumed that the first sending port determines that a receiving acknowledgment message from the second communication device is not received when the duration counted by the timer expires. The receiving acknowledgment message indicates that the second communication device has successfully received the first data unit group (for example, the data unit 1, the data unit 2, and the data unit P-1 shown in the foregoing example). In this case, the first sending port extracts the first data unit group from a link-level retransmission buffer corresponding to the first sending port, and sends the first data unit group to the second sending module, so that the first data unit group is retransmitted to the second communication device through the second transmission link. The second data unit group subsequently sent by the first sending port is sent to the second sending module. It may be understood that, in this example, when the first transmission link is abnormal, the first sending port retransmits the first data unit group and continues to send the second data unit group through the second transmission link.

It is assumed that the first sending port determines that the receiving acknowledgment message from the second communication device is received within the duration counted by the timer. This indicates that the second communication device has successfully received the first data unit group through the first transmission link. In this case, the first sending unit does not need to retransmit the first data unit group. If it is subsequently determined that the first transmission link is abnormal, the first sending port sends the second data unit group to the second sending module.

It may be understood that, in this example, if a data unit in the first data sub-stream is not successfully received by the second communication device, the first communication device retransmits the data unit together with the link-level retransmission mechanism, thereby implementing zero packet loss during transmission of the first data sub-stream.

### Example 3

When the first sending port detects that the first transmission link is abnormal, all the first data sub-stream has been transmitted to the first transmission link. It is assumed the first sending port receives, within the duration counted by the timer, a receiving acknowledgment message from the second communication device, where the receiving acknowledgment message indicates that the second communication device has successfully received all the first data sub-stream. In this case, the first sending port does not need to send the first data sub-stream to the second sending module. If the first sending port fails to receive, within the duration counted by the timer, the receiving acknowledgment message from the second communication device, the second communication device fails to receive the first data sub-stream. The first sending port sends the first data sub-stream to the second sending module.

### Example 4

A link-level retransmission buffer corresponding to the first sending port can buffer a limited amount of data. It is assumed that an amount of data that has been transmitted through the first transmission link in the first data sub-stream but for which no receiving acknowledgment message is received within the duration counted by the timer is greater than the amount of data that can be buffered by the link-level retransmission buffer. In this case, if a portion of data units in the first data sub-stream are not successfully sent to the second communication device through the first transmission link, a portion of data has overflowed the link-level retransmission buffer. In this case, the data overflowed from the link-level retransmission buffer cannot be switched to the second transmission link for retransmission, resulting in a packet loss. However, as shown in this example, all data streams that are to be subsequently sent by the first sending port to the second communication device are transmitted through the second transmission link, thereby effectively reducing a packet loss rate of the subsequently sent data streams.

Step 404: The first sending port sends the second data sub-stream to the second sending module.

For descriptions of a process of performing step 404 shown in this embodiment, refer to the step 203 corresponding to FIG. 2. Details are not described again.

It may be understood that the second sending module in this embodiment receives the first data sub-stream and the second data sub-stream from the first sending module 102.

Step 405: The second sending module sends the first data sub-stream and the second data sub-stream to the second communication device.

In this embodiment, when receiving the first data sub-stream and the second data sub-stream, the second sending module may send the first data sub-stream and the second data sub-stream to the second communication device. The second sending module separately performs electrical-to-optical conversion on the first data sub-stream and the second data sub-stream to obtain a first optical signal and a second optical signal. For descriptions of a process in which the second sending module sends the first optical signal and the second optical signal, refer to the descriptions of the process in which the second sending module sends the second optical signal in step 205 corresponding to FIG. 2. Details are not described again.

Step 406: The second receiving module sends the first data sub-stream and the second data sub-stream to the first receiving port.

The second receiving module receives the first optical signal and the second optical signal through the second transmission link. For descriptions of the second transmission link, refer to the descriptions corresponding to FIG. 1 and FIG. 2. Details are not described again. The second receiving module 115 separately performs optical-to-electrical conversion on the first optical signal and the second optical signal to obtain the first data sub-stream and the second data sub-stream, and sends the first data sub-stream and the second data sub-stream to the first receiving port 112.

Step 407: The first receiving port combines the first data sub-stream and the second data sub-stream into a target data stream.

For descriptions of a process of performing step 407 shown in this embodiment, refer to the step 208 corresponding to FIG. 2. Details are not described again.

In FIG. 4, an example in which the first transmission link is abnormal is used to describe a process in which the first communication device sends the target data stream to the second communication device. In another example, if the second transmission link is abnormal, the first communication device may send a data stream to the second communication device through the first transmission link when a packet loss rate is reduced or even zero packet loss is implemented. For a specific process, refer to the process in which the first transmission link is abnormal and the target data stream is transmitted through the second transmission link shown in FIG. 4. Details are not described.

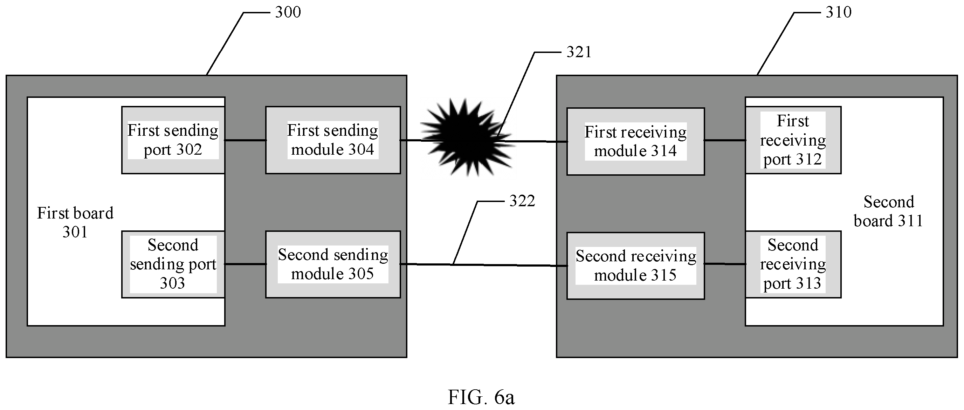

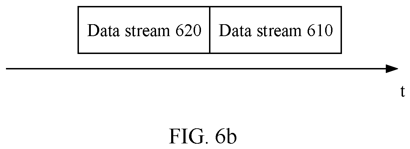

To better understand beneficial effects of the method provided in this embodiment, a process of transmitting a data stream when an abnormality occurs on the first transmission link in an existing communication system is first described with reference to FIG. 6a and FIG. 6b. FIG. 6a is an example diagram in which an abnormality occurs on a transmission link shown in FIG. 3. FIG. 6b is an example diagram of a time sequence of a data stream shown in FIG. 6a. The communication system shown in FIG. 6a includes two transmission links: a first transmission link and a second transmission link. The first transmission link includes the first sending module 304, the first optical fiber 321, and the first receiving module 314, and the second transmission link includes the second sending module 305, a second optical fiber 322, and the second receiving module 315. The first transmission link is used to transmit a data stream 610. However, if the first transmission link is abnormal, the first board 301 obtains a data stream 620. A time sequence in which the first board 301 sends the data stream 610 is earlier than a time sequence in which the data stream 620 is sent. Specifically, the data stream 610 is a data stream that has been transmitted through the first transmission link (that is, the first board 301 has sent the data stream 610 to the first sending port 302), and the data stream 620 is a data stream that has not been transmitted through the first transmission link (that is, the first board 301 has not yet sent the data stream 620 to the first sending port 302). If the first board 301 successfully sends the data stream 620 to the second communication device 310, the first board 301 switches transmission of the data stream 620 from the first transmission link to the second transmission link. The first board 301 sends the data stream 620 to the second sending port 303. The second sending port 303 sends the data stream 620 to the second sending module 305, and transmits the data stream 620 to the second communication device 310 through the second transmission link. For descriptions of a process in which the first communication device 300 transmits the data stream 620 through the second transmission link, refer to the descriptions of the process in which the first communication device 300 transmits the data stream 610 through the first transmission link. Details are not described again. However, because the first sending port 302 is connected only to the first sending module 304, the data stream 610 that has arrived at the first sending port 302 cannot be switched to the second transmission link for transmission. For example, it is assumed that the data stream 610 has been transmitted through the first transmission link, but the first communication device fails to receive a response message indicating that the second communication device successfully receives the data stream 610. The first sending port is connected only to the first sending module. In this case, the first sending port still retransmits the data stream 610 through the first transmission link, and the first transmission link is abnormal. As a result, even if the data stream 610 is retransmitted, the data stream 610 cannot be successfully transmitted to the second communication device. For another example, if the data stream 610 has not been transmitted through the first transmission link, but it is detected that the first transmission link is abnormal, and the first sending port is connected only to the first sending module, a transmission link cannot be switched for the data stream 610. As a result, the data stream 610 cannot be transmitted to the second communication device through a normal transmission link, and a packet loss occurs. It may be understood that, in the existing solutions shown in FIG. 6a and FIG. 6b, when the first transmission link is abnormal, a packet loss occurs in a data stream that has arrived at the first sending module 304 of the first sending port 302.

However, according to the method shown in this embodiment, for example, the communication system shown in FIG. 5 includes two transmission links: a first transmission link and a second transmission link. The first transmission link includes the first sending module 104, the first optical fiber 121, and the first receiving module 114, and the second transmission link includes the second sending module 105, the second optical fiber 122, and the second receiving module 115. Both the first sending module 104 and the second sending module 105 shown in this embodiment have a connection relationship with the first sending port 102. It may be understood that the same first sending port 102 shown in this embodiment is connected to both the first transmission link and the second transmission link. In this case, when the first transmission link is abnormal, the first data sub-stream that has arrived at the first sending module 102 is switched to the second sending module 105 for transmission, and the second sending module 105 is configured to send the first data sub-stream to the second communication device. According to the method shown in this embodiment, when the first transmission link is abnormal, the first data sub-stream that has arrived at the first sending port is switched to the second transmission link for transmission. This effectively reduces a packet loss rate, and even achieves zero packet loss. In addition, on the premise that a packet loss rate during transmission of the first data sub-stream is reduced, or even zero packet loss is implemented, because retransmission at a transmission layer level does not need to be performed through a transmission layer, compared with retransmission at the transmission layer level, direct transmission of the first data sub-stream that has arrived at the first sending port through the second transmission link effectively reduces a delay of transmission of the first data sub-stream.

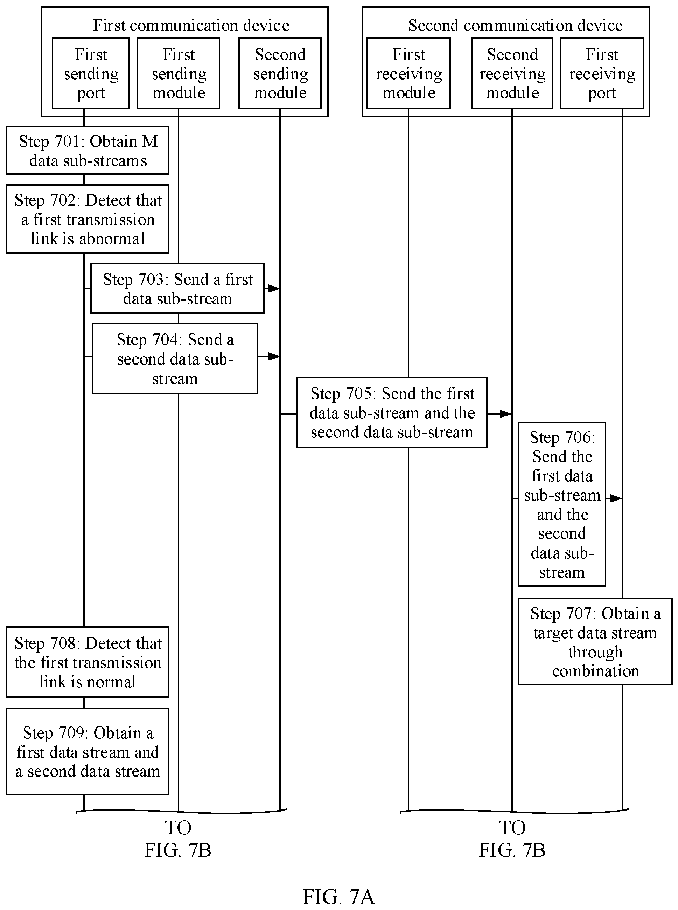

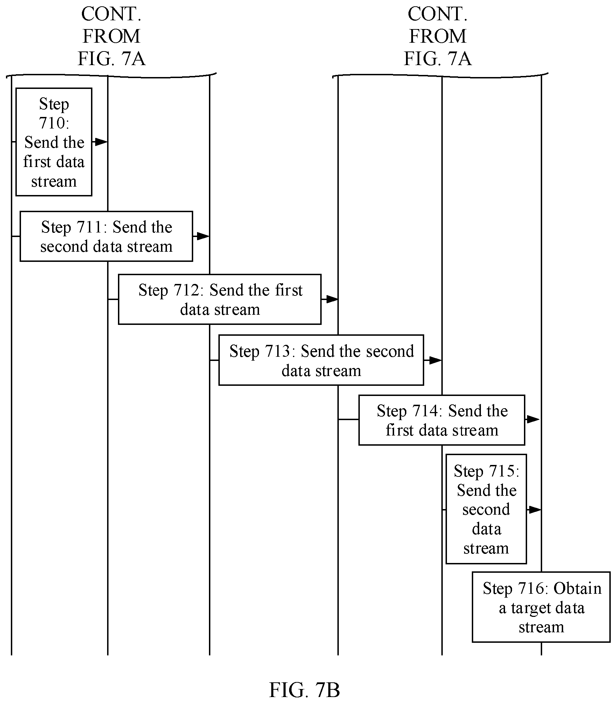

FIG. 7A and FIG. 7B are a third step flowchart of the data transmission method according to this application. In the embodiment shown in FIG. 4, a transmission process of a data stream is described by using an example in which an abnormality occurs on the first transmission link. For example, an abnormality type of the first transmission link is an intermittent disconnection of an optical port. In this case, the intermittent disconnection of the optical port of the first transmission link generally lasts for about 5 seconds, and then is restored to normal. The embodiment shown in FIG. 7A and FIG. 7B describes a transmission process of a data stream if the first transmission link is restored from abnormal to normal.

Step 701: The first sending port obtains M data sub-streams.

Step 702: The first sending port detects that a first transmission link is abnormal.

Step 703: The first sending port sends the first data sub-stream to the second sending module.

Step 704: The first sending port sends the second data sub-stream to the second sending module.

Step 705: The second sending module sends the first data sub-stream and the second data sub-stream to the second communication device.

Step 706: The second receiving module sends the first data sub-stream and the second data sub-stream to the first receiving port.

Step 707: The first receiving port combines the first data sub-stream and the second data sub-stream into a target data stream.

For descriptions of a process of performing step 701 to step 707 shown in this embodiment, refer to step 401 to step 407 that correspond to FIG. 4. Details are not described again.

Step 708: The first sending port detects that the first transmission link is restored from abnormal to normal.

A process in which the first sending port detects that the first transmission link is restored to normal is not limited in embodiments. For example, the first sending port sends a heartbeat data packet to the first sending module 304 based on heartbeat detection, and the first sending port receives a heartbeat response data packet. The heartbeat response data packet is a data packet that is received by the second board 311 through the first transmission link, and that is returned to the first communication device 300 based on the heartbeat data packet. The first sending port detects, based on the heartbeat data packet and the heartbeat response data packet, whether the first transmission link is restored to normal. Optionally, the processor of the first board may also detect, based on heartbeat detection, whether the first transmission link is restored to normal. When the first transmission link is restored from abnormal to normal, the first receiving module 114 can successfully receive a data stream from the first communication device through the first transmission link. In addition, a bit error rate of the received data stream is low, a packet loss rate of the received data stream is low, or the like.

Step 709: The first sending port obtains a first data stream and a second data stream.

The first sending port obtains a data stream to be transmitted through the second transmission link, and divides the data stream into the first data stream and the second data stream. For a division manner, refer to the descriptions of dividing the target data stream into the first data sub-stream and the second data sub-stream shown in step 701. Details are not described again.

Step 710: The first sending port sends the first data stream to the first sending module.

Step 711: The first sending port sends the second data stream to the second sending module.

In this embodiment, when the first sending port 102 of the first board 101 obtains the first data stream and the second data stream, the first sending port 102 separately sends the first data stream and the second data stream to the first sending module 104 and the second sending module 105.

Step 712: The first sending module sends the first data stream to the second communication device.

Step 713: The second sending module sends the second data stream to the second communication device.

Step 714: The first receiving module sends the first data stream to the second board.

Step 715: The second receiving module sends the second data stream to the second board.

Step 716: The first receiving port combines the first data stream and the second data stream into a target data stream.

For the steps 710 to 716 shown in this embodiment, refer to the process in which the first communication device sends the first data sub-stream and the second data sub-stream to the second communication device shown in step 204 to step 208 corresponding to FIG. 2. Details are not described again.

This embodiment describes a data stream transmission process in which the first transmission link is restored from abnormal to normal. For a data stream transmission process in which the second transmission link is restored from abnormal to normal, refer to the descriptions corresponding to FIG. 7A and FIG. 7B. Details are not described again.

According to the method shown in this embodiment, when the first communication device detects that the first transmission link is restored from abnormal to normal, the first communication device can reallocate rates of transmission through the first transmission link and the second transmission link, so that the first data stream is transmitted through the first transmission link that is restored to normal, and the second data stream is transmitted through the second transmission link. This ensures reliability of data stream transmission and reduces a packet loss rate, and even in a case in which zero packet loss is implemented, can further ensure balance between transmission rates of transmission links between the first communication device and the second communication device, thereby restoring bandwidth transmitted through the first transmission link and improving bandwidth utilization between the first communication device and the second communication device.

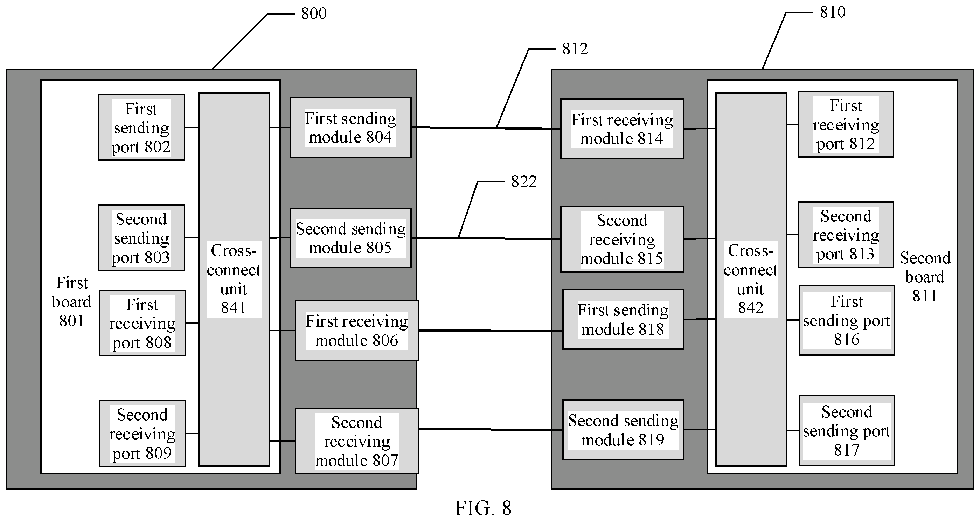

FIG. 8 is an example diagram of a structure of a communication system according to a second embodiment of this application. The communication system shown in this embodiment includes a first communication device 800 and a second communication device 810. The first communication device 800 specifically includes a first board 801, a first sending module 804, a second sending module 805, a first receiving module 806, and a second receiving module 807. For specific descriptions, refer to the descriptions corresponding to FIG. 1. Details are not described again. A difference between the first communication device 800 shown in FIG. 8 and the first communication device shown in FIG. 1 lies in that the first board 801 shown in FIG. 8 further includes a cross-connect unit 841. The cross-connect unit 841 is separately connected to a first sending port 802, a second sending port 803, a first receiving port 808, and a second receiving port 809 of the first board 801. In addition, the cross-connect unit 841 is further separately connected to the first sending module 804, the second sending module 805, the first receiving module 806, and the second receiving module 807. In this embodiment, an example in which the cross-connect unit 841 is a module included in the first board 801 is used, and this is not limited. For example, the cross-connect unit 841 may alternatively be a chip, a module, a board, or the like that is separate from the first board 801. The cross-connect unit 841 is configured to connect a circuit between a sending port and a sending module, and is configured to connect a circuit between a receiving port and a receiving module. The connection refers to a state in which a current can pass through. In this case, when the cross-connect unit 841 connects the circuit between the sending port and the sending module, a current emitted by the sending port can flow to the sending module. When the cross-connect unit 841 connects the circuit between the receiving port and the receiving module, a current emitted by the receiving module can flow to the receiving port.

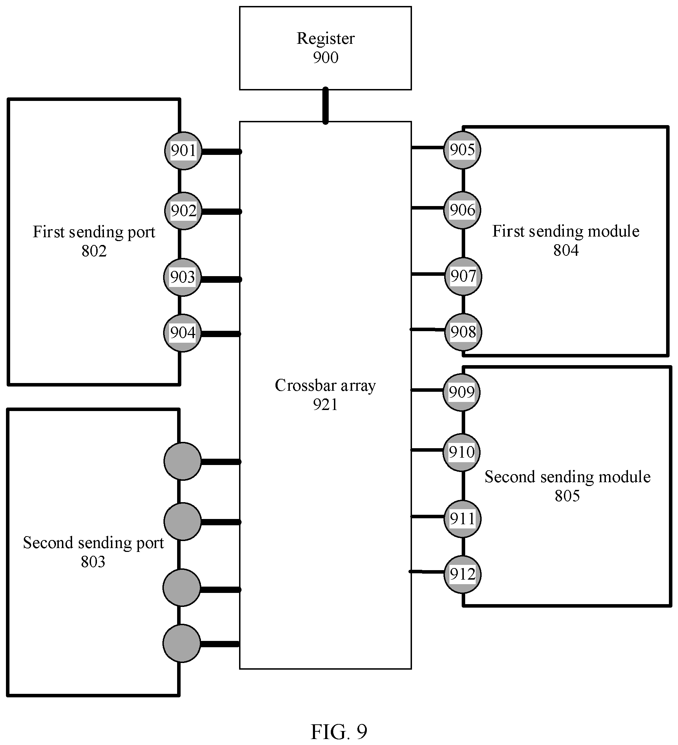

For example, if the cross-connect unit 841 receives a data stream from the first sending port 802, the cross-connect unit 841 may send the data stream to the first sending module 804 or the second sending module 805. The cross-connect unit is specifically described with reference to FIG. 9. FIG. 9 is an example diagram of the cross-connect unit shown in FIG. 8. The cross-connect unit 841 in this embodiment may include a register 900 and a crossbar array 921. The register 900 is connected to the crossbar array 921. The crossbar array 921 includes a plurality of circuits connected between the first sending port 802 and the first sending module 804, and connected between the first sending port 802 and the second sending module 805. Similarly, the crossbar array 921 further includes a plurality of circuits connected between the second sending port 803 and the first sending module 804, and connected between the second sending module 803 and the second sending module 805. The register 900 is connected to the crossbar array 921, and selects and controls, by using software configuration, whether to connect or disconnect each circuit in the crossbar array 921. Specifically, the first sending port 902 is used as an example. Four electrical interfaces (namely, an electrical interface 901, an electrical interface 902, an electrical interface 903, and an electrical interface 904) of the first sending port 802 are separately connected to the crossbar array 921, four electrical interfaces (namely, an electrical interface 905, an electrical interface 906, an electrical interface 907, and an electrical interface 908) of the first sending module 804 are connected to the crossbar array 921, and four electrical interfaces (namely, an electrical interface 909, an electrical interface 910, an electrical interface 911, and an electrical interface 912) of the second sending module 805 are separately connected to the crossbar array 921. It should be noted that, in this embodiment, descriptions of a quantity of electrical interfaces included in the first sending port 802 and each sending module are optional examples, and are not limited. The register 900 includes a plurality of bits. For example, the register 900 includes a bit 1 and a bit 2. The bit 1 is used to connect or disconnect a first sending circuit between the electrical interface 901 and the electrical interface 905, and the bit 2 is used to connect or disconnect a first sending circuit between the electrical interface 902 and the electrical interface 906. For another example, the register 900 includes a bit 3 and a bit 4, where the bit 3 is used to connect or disconnect a second sending circuit between the electrical interface 903 and the electrical interface 909, and the bit 4 is used to connect or disconnect a second sending circuit between the electrical interface 904 and the electrical interface 910. The bit 1 is used as an example. If a first sending circuit between the first sending port 802 and the first sending module 804 needs to be connected, a processor of the first board 801 sends control signaling to the register 900 through a bus, where the control signaling is used to set the bit 1 and the bit 2 of the register 900 to 1, so that a first sending circuit between the electrical interface 901 and the electrical interface 905 and a first sending circuit between the electrical interface 902 and the electrical interface 906 are connected. The control signaling is further used to set the bit 3 and the bit 4 of the register 900 to 1, so that the second sending circuit between the electrical interface 903 and the electrical interface 909 and the second sending circuit between the electrical interface 904 and the electrical interface 910 are connected. A data stream output by the first sending port 802 through the electrical interface 901 and the electrical interface 902 is transmitted to the first sending module 804 through a first sending circuit that has been connected in the crossbar array 921. A data stream output by the first sending port 802 through the electrical interface 903 and the electrical interface 904 is transmitted to the second sending module 805 through a second sending circuit that has been connected in the crossbar array 921. In this example, a bit of the register is set to 1 to connect a corresponding circuit. In another example, a bit of the register may alternatively be set to 0 to connect a corresponding circuit. In this embodiment, for example, the first board 801 includes one cross-connect unit. A quantity of cross-connect units included in the first board 801 is not limited in embodiments. For descriptions of a structure and a function of each cross-connect unit, refer to the descriptions in FIG. 9. Details are not described again. A description of an implementation of the cross-connect unit in this embodiment is an optional example, and is not limited, provided that the cross-connect unit can connect circuits between the sending port and the sending module.

The second communication device 810 specifically includes a second board 811, a first receiving module 814, a second receiving module 815, a first sending module 818, and a second sending module 819. For specific descriptions, refer to the descriptions corresponding to FIG. 1. Details are not described again. A difference between the second communication device 810 shown in FIG. 8 and the second communication device shown in FIG. 1 lies in that the second board 811 shown in FIG. 8 further includes a cross-connect unit 842. The cross-connect unit 842 is separately connected to a first receiving port 812, a second receiving port 813, a first sending port 816, and a second sending port 817 of the second board 811. In addition, the cross-connect unit 842 is further separately connected to the first receiving module 814, the second receiving module 815, the first sending module 818, and the second sending module 819. For descriptions of the cross-connect unit 842, refer to the descriptions of the cross-connect unit 841 included in the first communication device. Details are not described again. It may be understood that the cross-connect unit 842 is configured to connect a circuit between a sending port and a sending module, and connect a circuit between a receiving port and a receiving port.

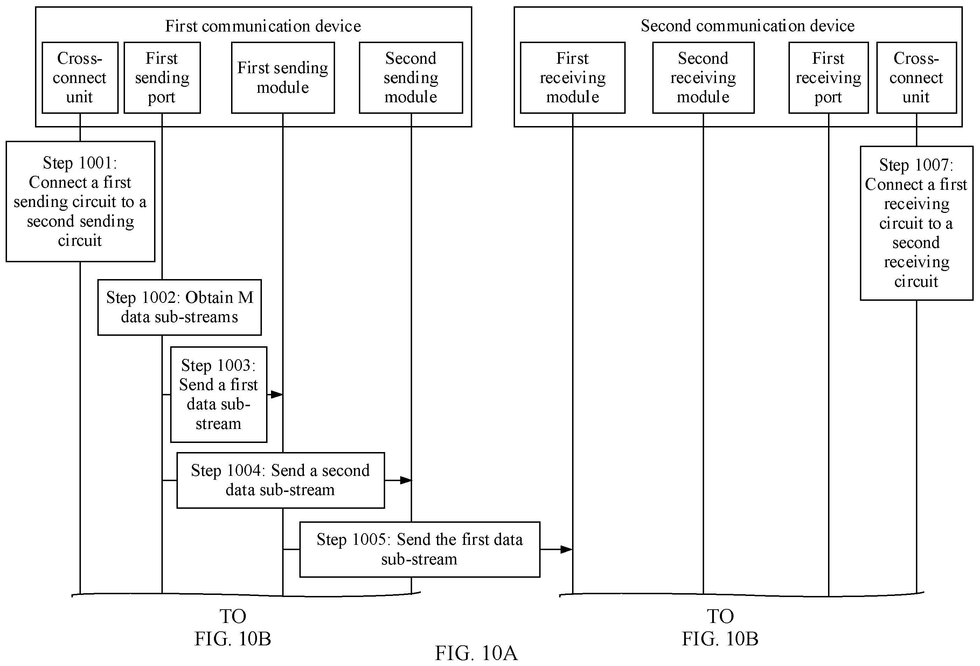

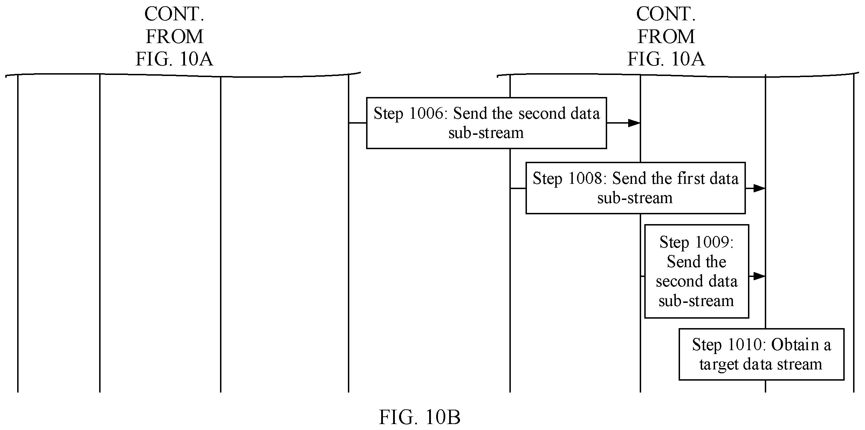

With reference to FIG. 8 to FIG. 10B, a process of performing the data transmission method provided in embodiments of this application is described. FIG. 10A and FIG. 10B are a fourth step flowchart of the data transmission method according to this application.

Step 1001: The cross-connect unit connects the first sending circuit to the second sending circuit.

When determining that both the first transmission link and the second transmission link are normal, the processor of the first board 801 sends first control signaling to the cross-connect unit 841. The cross-connect unit 841 connects the first sending circuit to the second sending circuit based on the first control signaling. The first sending circuit is a circuit between the first sending port 802 and the first sending module 804. The second sending circuit is a circuit between the first sending port 802 and the second sending module 805. For descriptions of connecting a circuit through the cross-connect unit 841, refer to the descriptions corresponding to FIG. 8. Details are not described again.

Step 1001 shown in this embodiment may be a step performed in advance. After step 1001 is performed once, when the first communication device subsequently performs the data transmission method, step 1001 does not need to be performed repeatedly.

Step 1002: The first sending port obtains M data sub-streams.

For descriptions of a process of performing step 1002 shown in this embodiment, refer to the step 201 corresponding to FIG. 2. Details are not described again.

Step 1003: The first sending port sends a first data sub-stream to the first sending module.

When the cross-connect unit 841 connects the first sending circuit, the first sending port 802 can transmit the first data sub-stream to the first sending module 804 through the first sending circuit.

Step 1004: The first sending port sends a second data sub-stream to the second sending module.

When the cross-connect unit 841 connects the second sending circuit, the first sending port 802 can transmit the second data sub-stream to the second sending module 805 through the second sending circuit.

A time sequence of performing step 1003 and step 1004 is not limited in embodiments.

Step 1005: The first sending module sends the first data sub-stream to the second communication device.

Step 1006: The second sending module sends the second data sub-stream to the second communication device.

For descriptions of a process of performing step 1005 and step 1006 shown in this embodiment, refer to step 204 and step 205 that correspond to FIG. 2. Details are not described again.

Step 1007: The cross-connect unit connects a first receiving circuit to a second receiving circuit.

When determining that both the first transmission link and the second transmission link are normal, the processor of the second board 811 sends second control signaling to the cross-connect unit 842. The cross-connect unit 842 connects the first receiving circuit to the second receiving circuit based on the second control signaling. The first receiving circuit is a circuit between the first receiving module 814 and the first receiving port 812, and the second receiving circuit is a circuit between the second receiving module 815 and the first receiving port 812. For descriptions of connecting a circuit through the cross-connect unit 842, refer to the descriptions corresponding to FIG. 8. Details are not described again.

Step 1007 shown in this embodiment may be a step performed in advance. After step 1007 is performed once, when the second communication device subsequently performs the data transmission method, step 1007 does not need to be performed repeatedly. A time sequence of performing step 1007, and step 1001 to step 1006 is not limited in embodiments.

Step 1008: The first receiving module sends the first data sub-stream to the first receiving module.

When the cross-connect unit 842 connects the first receiving circuit, the first receiving module can send the first data sub-stream to the first receiving port 812 through the first receiving circuit.

Step 1009: The second receiving module sends the second data sub-stream to the first receiving port.

When the cross-connect unit 842 connects the second receiving circuit, the second receiving module can send the second data sub-stream to the second receiving port 813 through the second receiving circuit.

Step 1010: The first receiving port combines the first data sub-stream and the second data sub-stream into a target data stream.

For descriptions of a process of performing step 1010 shown in this embodiment, refer to the step 208 corresponding to FIG. 2. Details are not described again.

According to the method shown in this embodiment, the first communication device can flexibly connect, through the included cross-connect unit, a circuit as required, to control a sending module to which a data stream emitted by the first board is specifically sent. This improves flexibility of data stream transmission. The second communication device can flexibly connect a circuit as required through the included cross-connect unit, so as to control a receiving module to which a data stream from the first communication device is specifically received, thereby improving reliability of data stream transmission.

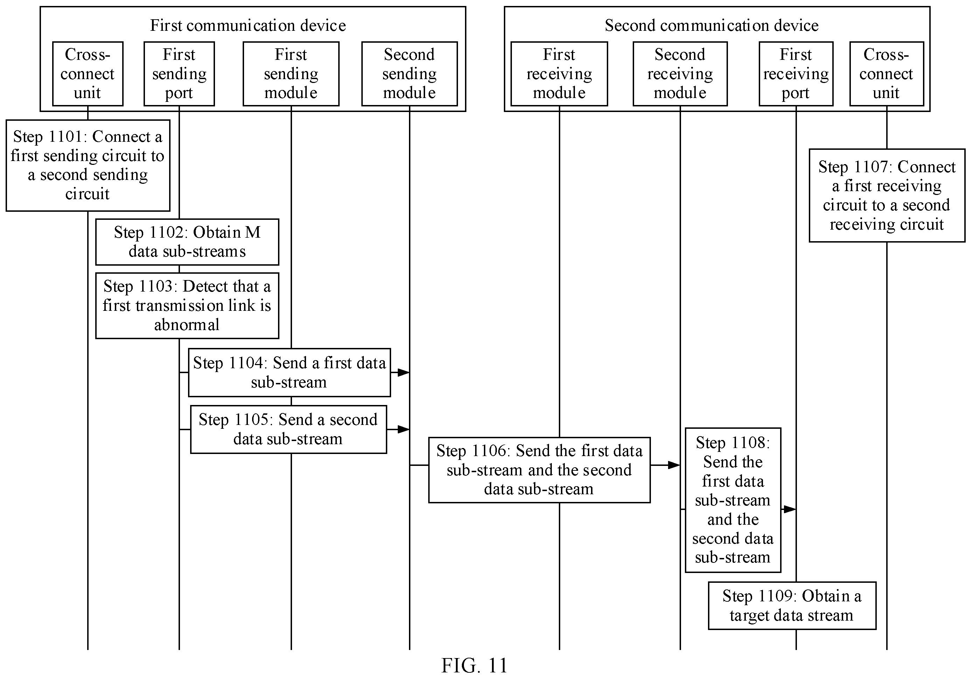

With reference to the embodiment shown in FIG. 11, the following describes how to transmit data if an abnormality occurs on the first transmission link shown in FIG. 8. FIG. 11 is a fifth step flowchart of the data transmission method according to this application.

Step 1101: The cross-connect unit connects the first sending circuit to the second sending circuit.

For descriptions of a process of performing step 1101 shown in this embodiment, refer to the step 1001 corresponding to FIG. 10A. Details are not described again.

Step 1102: The first sending port obtains M data sub-streams.

Step 1103: The first sending port detects that the first transmission link is abnormal.

For descriptions of a process of performing step 1102 and step 1103 shown in this embodiment, refer to step 401 and step 402 that correspond to FIG. 4. Details are not described again.

Step 1104: The first sending port sends a first data sub-stream to the second sending module.

When the cross-connect unit 841 connects the second sending circuit, the first sending port 802 can transmit the first data sub-stream to the second sending module 805 through the second sending circuit.

As shown in FIG. 8, the first transmission link includes the first sending module 804, a first optical fiber 812, and the first receiving module 814. The second transmission link includes the second sending module 805, a second optical fiber 822, and the second receiving module 815. The first transmission link is originally used to transmit the first data sub-stream. However, in this embodiment, the first sending port detects that the first transmission link is abnormal. In this case, if the first data sub-stream continues to be transmitted through the first transmission link, a bit error rate of transmission of the first data sub-stream is excessively high, and even transmission interruption occurs. Therefore, the first sending port 802 in this embodiment switches a traffic (namely, the first data sub-stream) to be transmitted through the first transmission link to the second transmission link for transmission, so as to ensure that the first data sub-stream can be successfully transmitted to the second communication device 810, effectively reduce a packet loss rate during transmission of a target data stream, and even implement zero packet loss during transmission of the target data stream. To switch the first data sub-stream from the first transmission link to the second transmission link for transmission, the first sending port 802 sends the first data sub-stream to the second sending module 805 through a second sending circuit that has been connected.

Step 1105: The first sending port sends a second data sub-stream to the second sending module.

For descriptions of a process of performing step 1105 shown in this embodiment, refer to the step 1004 corresponding to FIG. 10A. Details are not described again.

Step 1106: The second sending module sends the first data sub-stream and the second data sub-stream to the second communication device.

For descriptions of a process of performing step 1106 shown in this embodiment, refer to the step 405 corresponding to FIG. 4. Details are not described again.

Step 1107: The cross-connect unit connects the first receiving circuit to the second receiving circuit.

For descriptions of step 1107 shown in this embodiment, refer to corresponding step 1007 in FIG. 10B. Details are not limited. Step 1107 shown in this embodiment may be a step performed in advance. After step 1107 is performed once, when the second communication device subsequently performs the data transmission method, step 1107 does not need to be performed repeatedly. A time sequence of performing step 1107, and step 1101 to step 1106 is not limited in embodiments.

Step 1108: The second receiving module sends the first data sub-stream and the second data sub-stream to the first receiving port.

Step 1109: The first receiving port combines the first data sub-stream and the second data sub-stream into a target data stream.

For descriptions of a process of performing step 1108 to step 1109 shown in this embodiment, refer to step 406 to step 407 corresponding to FIG. 4. Details are not described again.

According to the method shown in this embodiment, the cross-connect unit connects the first sending circuit to the second sending circuit in advance. In this case, when the first transmission link is abnormal, a data stream emitted by the first sending port is sent to the second sending module through the second sending circuit, so as to ensure that when the first transmission link is abnormal, the data stream can be transmitted to the second communication device through the normal second transmission link. This ensures reliability of data stream transmission, effectively reduces a packet loss rate, and implements zero packet loss together with a link-level retransmission mechanism.

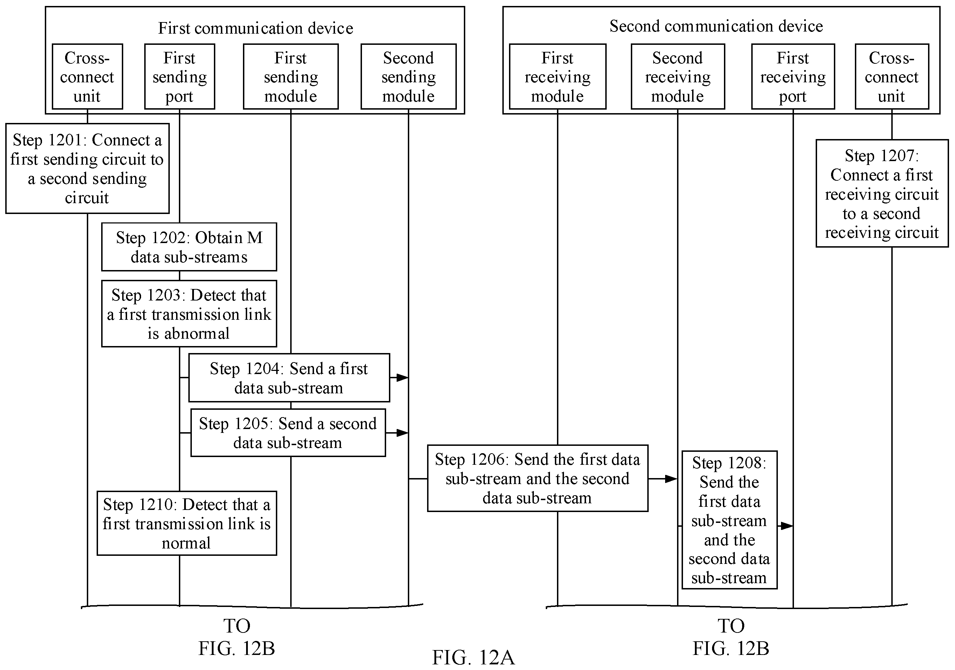

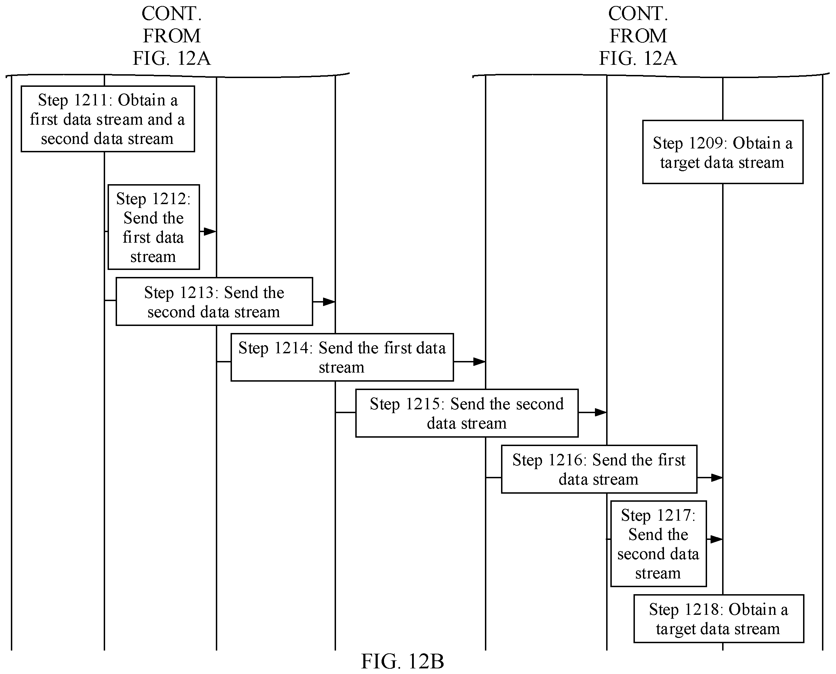

FIG. 12A and FIG. 12B are a sixth step flowchart of the data transmission method according to this application. In the embodiment shown in FIG. 11, a transmission process of a data stream is described by using an example in which an abnormality occurs on the first transmission link. The embodiment shown in FIG. 12A and FIG. 12B describes a transmission process of a data stream if the first transmission link is restored from abnormal to normal.

Step 1201: The cross-connect unit connects the first sending circuit to the second sending circuit.

Step 1202: The first sending port obtains M data sub-streams.

Step 1203: The first sending port detects that a first transmission link is abnormal.

Step 1204: The first sending port sends a first data sub-stream to the second sending module.

Step 1205: The first sending port sends a second data sub-stream to the second sending module.

Step 1206: The second sending module sends the first data sub-stream and the second data sub-stream to the second communication device.

Step 1207: The cross-connect unit connects the first receiving circuit to the second receiving circuit.

Step 1208: The second receiving module sends the first data sub-stream and the second data sub-stream to the first receiving port.

Step 1209: The first receiving port combines the first data sub-stream and the second data sub-stream into a target data stream.

For descriptions of a process of performing step 1201 to step 1209 shown in this embodiment, refer to step 1101 to step 1109 that correspond to FIG. 11. Details are not described again.

Step 1210: The first sending port detects that the first transmission link is restored from abnormal to normal.

For descriptions of a process of performing step 1211 shown in this embodiment, refer to the step 708 corresponding to FIG. 7A. Details are not described again.

Step 1211: The first sending port obtains a first data stream and a second data stream.

For descriptions of a process of performing step 1211 shown in this embodiment, refer to the step 709 corresponding to FIG. 7A. Details are not described again.

Step 1212: The first sending port sends the first data stream to the first sending module.

The first sending module 802 of the first board 801 shown in this embodiment sends the first data stream to the first sending module 804 through a first circuit.

Step 1213: The first sending port sends the first data stream to the second sending module.

The first sending port 802 of the first board 801 sends the second data stream to the second sending module 805 through a second circuit.

Step 1214: The first sending module sends the first data stream to the second communication device.

Step 1215: The second sending module sends the second data stream to the second communication device.

For descriptions of a process of performing step 1212 to step 1215 shown in this embodiment, refer to step 712 to step 715 that correspond to FIG. 7B. Details are not described again.

Step 1216: The first receiving module sends the first data stream to the second board.

The first receiving module 814 sends the first data stream to the second board 811 through the first receiving circuit.

Step 1217: The second receiving module sends the second data stream to the second board.

The second receiving module 815 sends the second data stream to the second board 811 through the second receiving circuit.

Step 1218: The first receiving port combines the first data stream and the second data stream into a target data stream.

For descriptions of a process of performing step 1216 to step 1218 shown in this embodiment, refer to step 714 to step 716 that correspond to FIG. 7B. Details are not described again.

According to the method shown in this embodiment, when the first communication device detects that the first transmission link is restored from abnormal to normal, the first communication device can reallocate rates of transmission through the first transmission link and the second transmission link, so that the first data stream is transmitted through the first transmission link that is restored to normal, and the second data stream is transmitted through the second transmission link. This ensures reliability of data stream transmission and reduces a packet loss rate, and even in a case in which zero packet loss is implemented, can further ensure balance between transmission rates of transmission links between the first communication device and the second communication device, thereby improving bandwidth utilization between the first communication device and the second communication device.

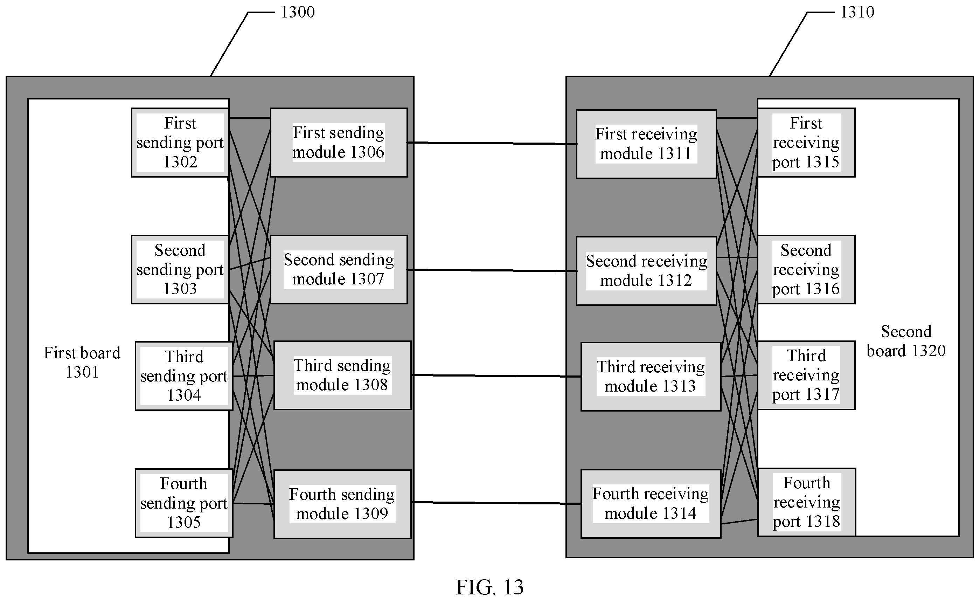

In the foregoing embodiment, for example, the first board of the first communication device includes two sending ports and the second board includes two receiving ports. FIG. 13 is an example diagram of a structure of a communication system according to a third embodiment of this application.

The communication system shown in this embodiment includes a first communication device 1300 and a second communication device 1310. For descriptions of types of the first communication device 1300 and the second communication device 1310, refer to the descriptions corresponding to FIG. 1. Details are not described again. The first communication device 1300 includes a first board 1301, and the first board 1301 includes four sending ports: a first sending port 1302, a second sending port 1303, a third sending port 1304, and a fourth sending port 1305. When the first communication device 1300 includes four sending ports, the first communication device 1300 further includes four sending modules: a first sending module 1306, a second sending module 1307, a third sending module 1308, and a fourth sending module 1309. It should be noted that, in this embodiment, an example in which a quantity of sending ports included in the first communication device 1300 is equal to a quantity of sending modules is used, and this is not limited. For example, the quantity of sending ports may be greater than the quantity of sending modules. For another example, the quantity of sending modules may be greater than the quantity of sending ports. The first sending port 1302 is used as an example. The first sending port 1302 is separately connected to the first sending module 1306, the second sending module 1307, the third sending module 1308, and the fourth sending module 1309. By analogy, the fourth sending port 1305 is separately connected to the first sending module 1306, the second sending module 1307, the third sending module 1308, and the fourth sending module 1309. In this embodiment, an example in which the sending port is connected to the sending module in the manner shown in FIG. 1 is used. In another example, the sending port may alternatively be connected to the sending module through a cross-connect unit shown in FIG. 8. For specific descriptions of the cross-connect unit, refer to FIG. 8 and FIG. 9. Details are not described again.

The second communication device 1310 includes a second board 1320, and the second board 1320 specifically includes four receiving ports: a first receiving port 1315, a second receiving port 1316, a third receiving port 1317, and a fourth receiving port 1318. The second communication device 1310 further includes a first receiving module 1311, a second receiving module 1312, a third receiving module 1313, and a fourth receiving module 1314. The first receiving port 1315 is separately connected to the first receiving module 1311, the second receiving module 1312, the third receiving module 1313, and the fourth receiving module 1314. By analogy, the fourth receiving port 1318 is separately connected to the first receiving module 1311, the second receiving module 1312, the third receiving module 1313, and the fourth receiving module 1314. In this embodiment, an example in which the receiving port is connected to the receiving module in the manner shown in FIG. 1 is used. In another example, the receiving port may alternatively be connected to the receiving module through a cross-connect unit shown in FIG. 8. For specific descriptions of the cross-connect unit, refer to FIG. 8 and FIG. 9. Details are not described again. For descriptions of the sending ports, the sending modules, the receiving ports, and the receiving modules shown in this embodiment, refer to the descriptions corresponding to FIG. 1. Details are not described again. For example, when the first sending port 1302 receives the target data stream, the first sending port 1302 may divide the target data stream into a first data sub-stream, a second data sub-stream, a third data sub-stream, and a fourth data sub-stream, and send the first data sub-stream to the first sending module 1306, send the second data sub-stream to the second sending module 1307, send the third data sub-stream to the third sending module 1308, and send the fourth data sub-stream to the fourth sending module 1309. For descriptions of transmission of the third data sub-stream and the fourth data sub-stream, refer to the descriptions of transmission of the first data sub-stream and the second data sub-stream in the foregoing method embodiments. Details are not described again. In this embodiment, an example in which a rate of the first data sub-stream, a rate of the second data sub-stream, a rate of the third data sub-stream, and a rate of the fourth data sub-stream are all equal is used. Specifically, for example, the rate of the first data sub-stream is 25% of a rate of the target data stream, and so on. The rate of the fourth data sub-stream is 25% of the rate of the target data stream. This improves transmission performance of the communication system and increases a throughput of the communication system. In another example, the rate of the first data sub-stream, the rate of the second data sub-stream, the rate of the third data sub-stream, and the rate of the fourth data sub-stream may alternatively be unequal. This is not specifically limited. In this embodiment, an example in which the first data sub-stream, the second data sub-stream, the third data sub-stream, and the fourth data sub-stream are all one is used, and this is not limited. In this embodiment, a quantity of first data sub-streams, a quantity of second data sub-streams, a quantity of third data sub-streams, and a quantity of fourth data sub-streams are not limited. It should be noted that, in this embodiment, quantities of receiving ports, sending ports, receiving modules, and sending modules included in the communication device are not limited. The first communication device 1300 is used as an example. When the first communication device 1300 includes four sending modules, each sending port is separately connected to four sending modules. In this embodiment, a description about a connection relationship between the sending port and the sending module is an optional example, and is not limited. To be specific, one sending port in the first communication device 1300 may be connected to a portion of the four sending modules. For example, the first sending port 1302 is connected to the first sending module 1306, the second sending module 1307, and the third sending module 1308. It is required that only one sending port be connected to at least two sending modules.

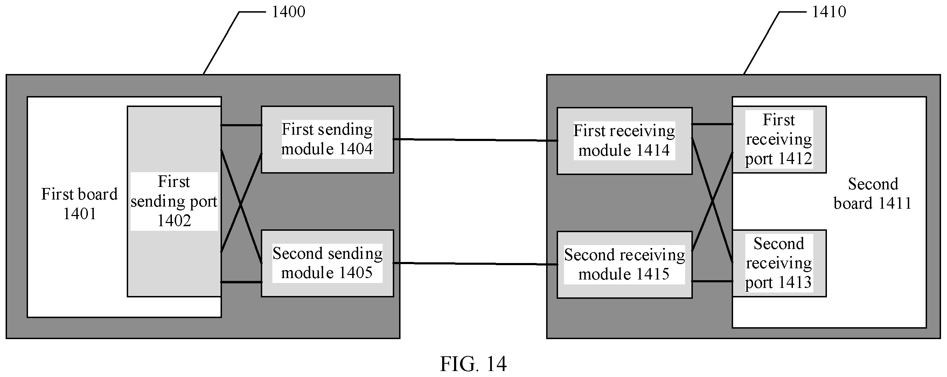

In the foregoing communication system, an example in which a sending port included in the first communication device is in a one-to-one relationship with a receiving port included in the second communication device is used. For example, if the first sending port and the first receiving port are in a one-to-one relationship, both the first data sub-stream and the second data sub-stream that are sent by the first sending port are sent to a corresponding same first receiving port. In the communication system shown in FIG. 14, the sending port included in the first communication device and the receiving port included in the second communication device may alternatively be in a one-to-many relationship. In this case, the first data sub-stream and the second data sub-stream that are sent by the first sending port are sent to different receiving ports. FIG. 14 is an example diagram of a structure of a communication system according to a fourth embodiment of this application. The communication system shown in this embodiment includes a first communication device 1400 and a second communication device 1410. For descriptions of types of the first communication device 1400 and the second communication device 1410, refer to the descriptions corresponding to FIG. 1. Details are not described again. The first communication device 1400 includes a first board 1401. A first electrical interface of a first sending port 1402 of the first board 1401 is connected to a first sending module 1404, a second electrical interface is connected to a second sending module 1405, a third electrical interface is connected to the first sending module 1404, and a fourth electrical interface is connected to the second sending module 1405. Quantities of first electrical interfaces, second electrical interfaces, third electrical interfaces, and fourth electrical interfaces are not limited in embodiments. Both the first electrical interface and the second electrical interface correspond to the first receiving port 1412 included in the second board 1411 of the second communication device 1410. Both the third electrical interface and the fourth electrical interface correspond to the second receiving port 1413 included in the second board 1411. The first receiving port 1412 is separately connected to the first receiving module 1414 and the second receiving module 1415. The first sending port 1402 sends a first data sub-stream to the first sending module 1404 through the first electrical interface, and sends a second data sub-stream to the second sending module 1405 through the second electrical interface. The first receiving port 1412 receives the first data sub-stream and the second data sub-stream. For descriptions of a specific data stream transmission process, refer to any one of the foregoing method embodiments. Details are not described again. Data streams sent by the first sending port 1402 through the third electrical interface and the fourth electrical interface are transmitted to the second receiving port 1413. For specific descriptions, refer to the descriptions of sending data streams to the first receiving port 1412 through the first electrical interface and the second electrical interface. Details are not described again. In this embodiment, each sending port and each sending module, and each receiving port and each receiving module may alternatively be connected through the cross-connect unit shown in FIG. 8. For specific descriptions of the cross-connect unit, refer to FIG. 8 and FIG. 9. Details are not described again.

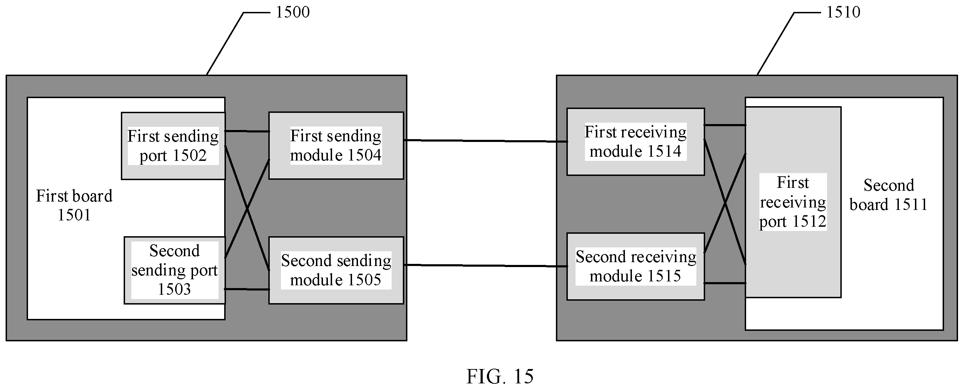

In the embodiment shown in FIG. 14, an example in which the first sending port can send a data stream to at least two different receiving ports is used, in other words, the sending port included in the first communication device and the receiving port included in the second communication device are in a one-to-many relationship. In the embodiment shown in FIG. 15, the sending port included in the first communication device and the receiving port included in the second communication device may also be in a many-to-one relationship. In other words, data streams sent by the plurality of sending ports of the first communication device are transmitted to a same receiving port of the second communication device. FIG. 15 is an example diagram of a structure of a communication system according to a fifth embodiment of this application. The communication system shown in this embodiment includes a first communication device 1500 and a second communication device 1510. For descriptions of types of the first communication device 1500 and the second communication device 1510, refer to the descriptions corresponding to FIG. 1. Details are not described again. The first communication device 1500 includes a first board 1501. A first sending port 1502 of the first board 1501 is separately connected to a first sending module 1504 and a second sending module 1505. A second sending port 1503 is separately connected to the first sending module 1504 and the second sending module 1505. For specific descriptions of the connections, refer to the descriptions corresponding to FIG. 1. Details are not described again. The second communication device 1510 includes a second board 1511. A first electrical interface of the second board 1511 is connected to a first receiving module 1514, a second electrical interface is connected to a second receiving module 1515, a third electrical interface is connected to the first receiving module 1514, and a fourth electrical interface is connected to the second receiving module 1515. Quantities of first electrical interfaces, second electrical interfaces, third electrical interfaces, and fourth electrical interfaces are not limited in embodiments. The first electrical interface and the second electrical interface correspond to the first sending port 1502 included in the first board 1501 of the first communication device 1500. To be specific, the first sending port 1502 sends a first data sub-stream to the first receiving port 1512 through the first sending module 1504, and the first sending port 1502 sends a second data sub-stream to the first receiving port 1512 through the second sending module 1505. For descriptions of a specific data stream transmission process, refer to the descriptions in any one of the foregoing method embodiments. Details are not described again. The third electrical interface and the fourth electrical interface of the first receiving port 1512 correspond to the second sending port 1503 included in the first board 1501 of the first communication device. Therefore, a data stream sent by the second sending port 1503 is also transmitted to the first receiving port 1512. For specific descriptions of the transmission, refer to the descriptions of sending the data stream by the first sending port 1502 to the first receiving port 1512. Details are not described again. In this embodiment, each sending port and each sending module, and each receiving port and each receiving module may alternatively be connected through the cross-connect unit shown in FIG. 8. For specific descriptions of the cross-connect unit, refer to FIG. 8 and FIG. 9. Details are not described again.

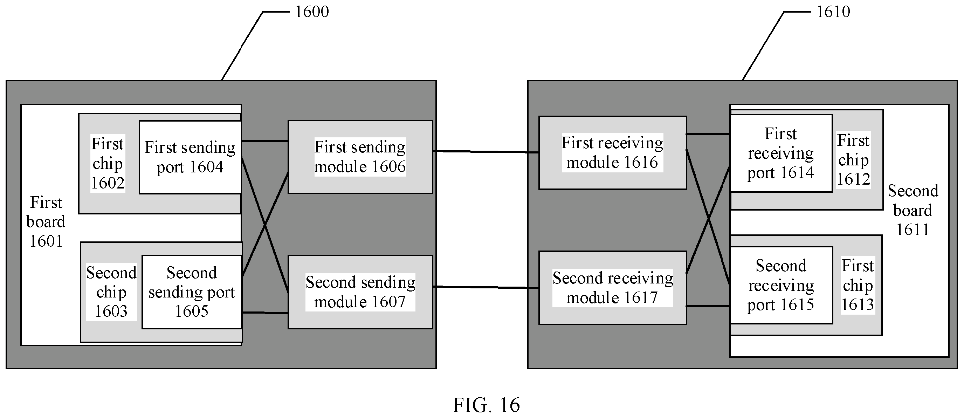

In the communication system shown in the foregoing embodiments, an example in which different sending ports are all located on a same chip of a same board, and different receiving ports are all located on a same chip of a same board is used. In the embodiment shown in FIG. 16, different sending ports may be located on different chips of a same board, and different receiving ports may be located on different chips of a same board. FIG. 16 is an example diagram of a structure of a communication system according to a sixth embodiment of this application. The communication system shown in this embodiment includes a first communication device 1600 and a second communication device 1610. For descriptions of types of the first communication device 1600 and the second communication device 1610, refer to the descriptions corresponding to FIG. 1. Details are not described again. The first communication device 1600 in this embodiment includes a first board 1601. The first board 1601 specifically includes a first chip 1602 and a second chip 1603. The first chip 1602 specifically includes a first sending port 1604. The second chip 1603 specifically includes a second sending port 1605. The first sending port 1604 is separately connected to a first sending module 1606 and a second sending module 1607. The second sending port 1605 is separately connected to the first sending module 1606 and the second sending module 1607. For specific descriptions of the connection, refer to the descriptions corresponding to FIG. 1. Details are not described again. The second communication device 1610 in this embodiment includes a second board 1611. The second board 1611 specifically includes a first chip 1612 and a second chip 1613. The first chip 1612 specifically includes a first receiving port 1614. The second chip 1613 specifically includes a second receiving port 1615. The first receiving port 1614 is separately connected to the first receiving module 1616 and the second receiving module 1617. The second receiving port 1615 is separately connected to the first receiving module 1616 and the second receiving module 1617. For specific descriptions of the connection, refer to the descriptions corresponding to FIG. 1. Details are not described again. For descriptions of a process in which the communication system in this embodiment performs the data transmission method, refer to any one of the foregoing method embodiments. Details are not described again. In this embodiment, each sending port and each sending module, and each receiving port and each receiving module may alternatively be connected through the cross-connect unit shown in FIG. 8. For specific descriptions of the cross-connect unit, refer to FIG. 8 and FIG. 9. Details are not described again.

In the foregoing embodiment, that the communication system is used in an optical communication system is used as an example. It should be noted that a type of a system to which the communication system is used is not limited in this application. For example, the communication system may be used in a wireless communication system. For descriptions of a process in which the wireless communication system performs the data transmission method, refer to any one of the embodiments shown in FIG. 2, FIG. 4, FIG. 7A and FIG. 7B, FIG. 10A and FIG. 10B, FIG. 11, and FIG. 12A and FIG. 12B. Details are not described again. A difference between the data transmission method performed by the wireless communication system and the data transmission method performed by the optical communication system lies in that functions of the sending modules and the receiving modules are different. Each sending module and each receiving module included in the wireless communication system shown in this embodiment are antennas. Still refer to FIG. 1. The first sending module 104 includes a first transmit antenna, and the second sending module 105 includes a second transmit antenna. The first receiving module 114 includes a first receive antenna, and the second receiving module 115 includes a second receive antenna. When the first sending module 104 receives a first data sub-stream from the first sending port 102, the first sending module 104 converts the first data sub-stream into a first electromagnetic wave, and radiates the first electromagnetic wave to the second communication device 110. When the second sending module 105 receives a second data sub-stream from the first sending port 102, the second sending module 105 converts the second data sub-stream into a second electromagnetic wave, and radiates the second electromagnetic wave to the second communication device 110. The first receiving module 114 receives the first electromagnetic wave from the first sending module 104, and converts the first electromagnetic wave into the first data sub-stream. The first receiving module 114 sends the first data sub-stream to the first receiving port 112. The second receiving module 115 receives the second electromagnetic wave from the second sending module 105, and converts the second electromagnetic wave into the second data sub-stream. The second receiving module 115 sends the second data sub-stream to the first receiving port 112.

For another example, communication devices included in the communication system may be connected to each other through a cable. For descriptions of the process in which the communication system shown in this embodiment performs the data transmission method, refer to any embodiment shown in FIG. 2, FIG. 4, FIG. 7A and FIG. 7B, FIG. 10A and FIG. 10B, FIG. 11, and FIG. 12A and FIG. 12B. Details are not described again. A difference between the data transmission method performed by the communication system shown in this embodiment and the data transmission method performed by the optical communication system is that functions of the sending modules and the receiving modules are different. Each sending module and each receiving module included in the wireless communication system shown in this embodiment are connectors. Specifically, the connector may be an active connector or a passive connector. In this embodiment, an example in which the connector is an active connector is used. The active connector has a high failure rate, and may easily cause an abnormality of a transmission link. FIG. 1 is still used as an example. The first sending module 104 includes a first connector, the second sending module 105 is a second connector, the first receiving module 114 is a third connector, and the second receiving module 115 is a fourth connector. The first connector is connected to the third connector through a first cable. The second connector is connected to the fourth connector through a second cable. When the first data sub-stream from the first sending port 102 is received by the first connector, the first data sub-stream is sent to the third connector through the first cable. The third connector sends the first data sub-stream to the first receiving port 112. The first sending port 102 sends the second data sub-stream to the second connector, and sends the second data sub-stream to the fourth connector through the second cable. The fourth connector sends the second data sub-stream to the first receiving port 112.

An embodiment of this application provides a communication device. For descriptions of a structure of the communication device, refer to any one of the foregoing embodiments shown in FIG. 1, FIG. 3, FIG. 8, FIG. 13, FIG. 14, FIG. 15, and FIG. 16. Details are not described again. It may be understood that the first communication device shown in any one of the embodiments of FIG. 1, FIG. 3, FIG. 8, FIG. 13, FIG. 14, FIG. 15, and FIG. 16 includes a first board, and a sending module and a receiving module that are connected to the first board. In addition, the second communication device includes a second board and a sending module and a receiving module that are connected to the second board. In another example, the first communication device provided in this embodiment of this application may include a housing, and the first board is encapsulated inside the housing. The housing includes an electrical interface. In other words, the first communication device shown in this example does not include the sending module and the receiving module, and provides only an electrical interface configured to connect the sending module to the receiving module. Similarly, the second communication device may include a housing. The second board is encapsulated inside the housing. The housing includes an electrical interface. The second communication device shown in this example does not include the sending module and the receiving module, and provides only an electrical interface configured to connect the sending module to the receiving module.

An embodiment of this application further provides a digital processing chip, including a processing chip and a memory. The memory and the processing chip are interconnected through a line. The memory stores instructions, and the processing chip is configured to perform the procedure performed by the first board or the second board according to any one of the foregoing method embodiments.

An embodiment of this application further provides a computer storage medium, including instructions. When the instructions are run on a computer, the computer is enabled to perform the procedure performed by the first board or the second board according to any one of the foregoing method embodiments.

An embodiment of this application further provides a computer program product including instructions. When the computer program product runs on a computer, the computer is enabled to perform the procedure performed by the first board or the second board according to any one of the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A portion or all of the units may be selected based on actual requirements to achieve the objectives of the solutions of embodiments.

## Claims

1. A data transmission method, wherein the method is applied to a first communication device, the first communication device comprises a sending port, the sending port is separately connected to a first sending module and a second sending module, a transmission link on which the first sending module is located is different from a transmission link on which the second sending module is located, and the method comprises:
sending, by the first communication device, a first data sub-stream to the first sending module through the sending port, wherein the first sending module is configured to send the first data sub-stream to a second communication device; and
sending, by the first communication device, a second data sub-stream to the second sending module through the sending port, wherein the second sending module is configured to send the second data sub-stream to the second communication device, the first data sub-stream and the second data sub-stream are two of M data sub-streams, and M is any integer not less than 2.

2. The method according to claim 1, wherein the sending port is connected to the first sending module through a first sending circuit, the sending port is connected to the second sending module through a second sending circuit, and sending, by the first communication device, the first data sub-stream to the first sending module through the sending port comprises:
sending, by the first communication device, the first data sub-stream to the first sending module through the sending port and the first sending circuit; and
sending, by the first communication device, the second data sub-stream to the second sending module through the sending port comprises:
sending, by the first communication device, the second data sub-stream to the second sending module through the sending port and the second sending circuit.

3. The method according to claim 1 or 2, wherein before sending, by the first communication device, the first data sub-stream to the first sending module through the sending port, the method further comprises:
detecting, by the first communication device, that a first transmission link is abnormal, wherein the first transmission link is the transmission link on which the first sending module is located, and the first transmission link is connected between the first communication device and the second communication device; and
sending, by the first communication device, at least one portion of the first data sub-stream to the second sending module through the sending port, wherein the second sending module is configured to send the at least one portion of the first data sub-stream and the second data sub-stream to the second communication device.

4. The method according to claim 2, wherein the first communication device further comprises a cross-connect unit, and before sending, by the first communication device, the first data sub-stream to the first sending module through the sending port and the first sending circuit, and sending, by the first communication device, the second data sub-stream to the second sending module through the sending port and the second sending circuit, the method further comprises:
connecting, by the first communication device, the first sending circuit to the second sending circuit through the cross-connect unit.

5. The method according to claim 4, wherein before connecting, by the first communication device, the first sending circuit to the second sending circuit through the cross-connect unit, the method further comprises:
detecting, by the first communication device, that both a first transmission link and a second transmission link are normal, wherein the first transmission link and the second transmission link are separately connected between the first communication device and the second communication device, the first transmission link is the transmission link on which the first sending module is located, and the second transmission link is the transmission link on which the second sending module is located.

6. The method according to claim 2, 4, or 5, wherein before sending, by the first communication device, the first data sub-stream to the first sending module through the sending port, the method further comprises:
detecting, by the first communication device, that the first transmission link is abnormal, wherein the first transmission link is the transmission link on which the first sending module is located, and the first transmission link is connected between the first communication device and the second communication device; and
sending, by the first communication device, at least one portion of the first data sub-stream to the second sending module through the sending port and the second sending circuit, wherein the second sending module is configured to send the at least one portion of the first data sub-stream and the second data sub-stream to the second communication device.

7. The method according to claim 3 or 6, wherein after detecting, by the first communication device, that the first transmission link is abnormal, the method further comprises:
detecting, by the first communication device, that the first transmission link is normal, and obtaining, by the first communication device, a first data stream, wherein the first data stream is a portion of a data stream to be sent through the second sending module;
sending, by the first communication device, the first data stream to the first sending module through the sending port; and
sending, by the first communication device, a second data stream to the second sending module through the sending port.

8. A data transmission method, wherein the method is applied to a second communication device, the second communication device comprises a receiving port, the receiving port is separately connected to a first receiving module and a second receiving module, and the method comprises:
receiving, by the receiving port of the second communication device, a first data sub-stream from a first communication device through the first receiving module; and
receiving, by the receiving port of the second communication device, a second data sub-stream from the first communication device through the second receiving module, wherein the first data sub-stream and the second data sub-stream are two of M data sub-streams, M is any integer not less than 2, the M data sub-streams are from a same sending port of the first communication device, and a transmission link on which the first receiving module is located is different from a transmission link on which the second receiving module is located.

9. The method according to claim 8, wherein the receiving port is connected to the first receiving module through a first receiving circuit, the receiving port is connected to the second receiving module through a second receiving circuit, and receiving, by the receiving port of the second communication device, the first data sub-stream from the first communication device through the first receiving module comprises:
receiving, by the receiving port of the second communication device, the first data sub-stream from the first receiving module through the first receiving circuit; and
receiving, by the receiving port of the second communication device, the second data sub-stream from the first communication device through the second receiving module comprises:
receiving, by the receiving port of the second communication device, the second data sub-stream from the second receiving module through the second receiving circuit.

10. The method according to claim 8 or 9, wherein after receiving, by the receiving port of the second communication device, the first data sub-stream from the first communication device through the first receiving module, and receiving, by the receiving port of the second communication device, the second data sub-stream from the first communication device through the second receiving module, the method further comprises:
combining, by the second communication device, the first data sub-stream and the second data sub-stream into a target data stream.

11. The method according to any one of claims 8 to 10, wherein receiving, by the receiving port of the second communication device, the second data sub-stream from the first communication device through the second receiving module comprises:
detecting, by the second communication device, that a first transmission link is abnormal; and
receiving, by the receiving port of the second communication device, the first data sub-stream and the second data sub-stream from the first communication device through the second receiving module, wherein the first transmission link is the transmission link on which the first receiving module is located, and the first transmission link is connected between the first communication device and the second communication device.

12. The method according to claim 9, wherein the second communication device further comprises a cross-connect unit, and before receiving, by the receiving port of the second communication device, the first data sub-stream from the first receiving module through the first receiving circuit, and receiving, by the receiving port of the second communication device, the second data sub-stream from the second receiving module through the second receiving circuit, the method further comprises:
connecting, by the second communication device, the first receiving circuit to the second receiving circuit through the cross-connect unit.

13. The method according to claim 12, wherein connecting, by the second communication device, the first receiving circuit to the second receiving circuit through the cross-connect unit comprises:
detecting, by the second communication device, that both a first transmission link and a second transmission link are normal, wherein the first transmission link and the second transmission link are separately connected between the first communication device and the second communication device, the first transmission link is the transmission link on which the first receiving module is located, and the second transmission link is the transmission link on which the second receiving module is located.

14. The method according to claim 9, 12, or 13, wherein before receiving, by the receiving port of the second communication device, the second data sub-stream from the second receiving module through the second receiving circuit, the method further comprises:
detecting, by the second communication device, that the first transmission link is abnormal, wherein the first transmission link is the transmission link on which the first receiving module is located, and the first transmission link is connected between the first communication device and the second communication device; and
the method further comprises:
receiving, by the receiving port of the second communication device, the first data sub-stream from the second receiving module through the second receiving circuit.

15. A communication device, comprising a board, a first sending module, and a second sending module, wherein a sending port of the board is separately connected to the first sending module and the second sending module, and a transmission link on which the first sending module is located is different from a transmission link on which the second sending module is located;
the sending port is configured to send a first data sub-stream to the first sending module, and the first sending module is configured to send the first data sub-stream to another communication device; and
the sending port is further configured to send a second data sub-stream to the second sending module, wherein the second sending module is configured to send the second data sub-stream to the another communication device, the first data sub-stream and the second data sub-stream are two of M data sub-streams, and M is any integer not less than 2.

16. The communication device according to claim 15, wherein the sending port is connected to the first sending module through a first sending circuit, and the sending port is connected to the second sending module through a second sending circuit.

17. The communication device according to claim 15 or 16, wherein the board is further configured to detect that a first transmission link is abnormal, wherein the first transmission link is the transmission link on which the first sending module is located, and the first transmission link is connected between the communication device and the another communication device; and
the sending port is further configured to send at least one portion of the first data sub-stream to the second sending module, wherein the second sending module is configured to send the first data sub-stream and the second data sub-stream to the another communication device.

18. The communication device according to claim 16, wherein the communication device further comprises a cross-connect unit, the cross-connect unit is connected to the first sending circuit and the second sending circuit, and the cross-connect unit is configured to connect the first sending circuit to the second sending circuit.

19. A communication device, comprising a board, a first receiving module, and a second receiving module, wherein a receiving port of the board is separately connected to the first receiving module and the second receiving module, and a transmission link on which the first receiving module is located is different from a transmission link on which the second receiving module is located;
the receiving port is configured to receive a first data sub-stream from another communication device through the first receiving module; and
the receiving port is further configured to receive a second data sub-stream from the another communication device through the second receiving module, wherein the first data sub-stream and the second data sub-stream are two of M data sub-streams, M is any integer not less than 2, the M data sub-streams are from a same sending port of the another communication device, and the transmission link on which the first receiving module is located is different from the transmission link on which the second receiving module is located.

20. The communication device according to claim 19, wherein the receiving port is connected to the first receiving module through a first receiving circuit, and the receiving port is connected to the second receiving module through a second receiving circuit.

21. The communication device according to claim 20, wherein the communication device further comprises a cross-connect unit, the cross-connect unit is connected to the first receiving circuit and the second receiving circuit, and the cross-connect unit is configured to connect the first receiving circuit to the second receiving circuit.

22. A computer storage medium, comprising instructions, wherein when the instructions are run on a computer, the computer is enabled to perform the method according to any one of claims 1 to 14.
